(19) Europäisches Patentamt / European Patent Office / Office européen des brevets

(11) **EP 4 679 157 A2**

(12) **EUROPEAN PATENT APPLICATION**

(43) Date of publication:
14.01.2026 Bulletin 2026/03

(21) Application number: 25212017.5

(22) Date of filing: 29.10.2025

(51) International Patent Classification (IPC):
*G02B 9/62* (2006.01)     *G02B 9/64* (2006.01)
*G02B 13/00* (2006.01)    *G02B 13/18* (2006.01)
*H04N 23/00* (2023.01)

(52) Cooperative Patent Classification (CPC):
**G02B 13/18; G02B 9/62; G02B 9/64;**
**G02B 13/0045; G02B 13/006; H04N 23/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.10.2024  CN 202411534743

(71) Applicant: **Jiangxi OFILM Optical Co. Ltd.**
**Nanchang, Jiangxi 330096 (CN)**

(72) Inventor: **KENJI, IIJIMA**
**Nanchang, 330096 (CN)**

(74) Representative: **Metida**
**Gyneju str. 16**
**01109 Vilnius (LT)**

(54) **OPTICAL LENS, IMAGE MODULE, AND TERMINAL DEVICE**

(57)     An optical lens (100) includes: a first lens (L1), a second lens (L2), and a sixth lens (L6) each having negative refractive power, a third lens (L3), a fourth lens (L4), a fifth lens (L5), and a seventh lens (L7) each having positive refractive power. Object side surfaces (S1, S5, S7, S9, S13) of the first, third, fourth, fifth, and seventh lenses (L1, L3, L4, L5, L7), and imaging side surfaces (S4, S6, S10) of the second, third, and fifth lenses (L2, L3, L5) are both convex near the optical axis (O). An imaging side surface (S2) of the first lens (L1), an object side surface (S3) of the second lens (L2), an object side surface (S11) of the sixth lens (L6), and an imaging side surface (S14) of the seventh lens (L7) are both concave near the optical axis (O). The optical lens (100) satisfies: 115deg≤FOV≤125deg, and 5<TTL/F<7.

FIG.1

**Description**

FIELD

The present invention relates to field of imaging, and in particular to an optical lens, an image module, and a terminal device.

BACKGROUND

With the development of the automotive industry, the national requirements for road traffic safety and vehicle safety are constantly increasing. The application of ADAS (Advanced Driving Assistance System), DMS (Driver Monitor System), and CMS (Camera Monitor System) in vehicle driving is gradually expanding. In the context of the rise of intelligent cockpits, the requirements for automotive cameras are gradually increasing. However, the current automotive cameras, under the trend of miniaturization design, cannot achieve high-pixel imaging.

SUMMARY

The present disclosure discloses an optical lens, an image module, and a terminal device, which may achieve high-pixel imaging while meeting the miniaturization design of optical lens.

In order to achieve the above objects, in a first aspect, the present application discloses an optical lens. The optical lens sequentially includes a first lens, a second lens, a third lens, a fourth lens, a fifth lens, a sixth lens, and a seventh lens along an optical axis from an object side to an imaging side. The first lens has negative refractive power, an object side surface of the first lens is convex near the optical axis, and an imaging side surface of the first lens is concave near the optical axis. The second lens has negative refractive power, an object side surface of the second lens is concave near the optical axis, and an imaging side surface of the second lens is convex near the optical axis. The third lens has positive refractive power, and an object side surface and an imaging side surface of the third lens are both convex near the optical axis. The fourth lens has positive refractive power, and an object side surface of the fourth lens is convex near the optical axis. The fifth lens has positive refractive power, an object side surface and an imaging side surface of the fifth lens are both convex near the optical axis. The sixth lens has negative e refractive power, and an object side surface of the sixth lens is concave near the optical axis. The seventh lens has positive refractive power, an object side surface of the seventh lens is convex near the optical axis, and an imaging side surface of the seventh lens is concave near the optical axis. The optical lens satisfying following conditional expressions: $115deg \leq FOV \leq 125deg$, and $5 < TTL/F < 7$. FOV is the maximum field of view angle of the optical lens, TTL is a distance from an object side surface of the first lens to the image plane of the optical lens along the optical axis, and F is a focal length of the optical lens.

In the above optical lens, in order to meet the requirements of both miniaturization and high imaging quality, the refractive power and surface shape of the seven lenses are reasonably arranged. Specifically, the first lens is set to have negative refractive power, and its object side surface and imaging side surface are convex and concave near the optical axis, respectively. This design is conducive to collecting more light into the optical lens, achieving wide-angle imaging. The second lens has negative refractive power, and its object side surface and imaging side surface are concave and convex near the optical axis, respectively. This design helps the light to enter the optical lens gently, thereby correcting the distortion of the optical lens and reducing the aberration, so that the imaging quality improved. The third lens has positive refractive power, and both its object side surface and imaging side surface are convex near the optical axis. This design is beneficial for correcting the field curvature of the optical lens. The fourth lens has positive refractive power, and its object side surface is convex near the optical axis. This helps correct the aberration of the optical lens. The fifth lens has positive refractive power, and the sixth lens has negative refractive power. Both the object side surface and imaging side surface of the fifth lens are convex near the optical axis, while the object side surface of the sixth lens is concave near the optical axis. This design not only enables the fifth and sixth lenses to be cemented together, which is conducive to correcting the aberration of the optical lens and improving the imaging quality, but also reasonably distributes the refractive power of the fifth and sixth lenses. The seventh lens has positive refractive power, and its object side surface and imaging side surface are convex and concave near the optical axis, respectively. This design can correct the off-axis spherical aberration and chromatic aberration of the optical lens, thereby improving the imaging quality. Moreover, among the seven lenses of the optical lens, multiple lenses adopt a concave-convex lens design, which can further reduce the overall length of the optical lens, thus achieving a miniaturized design.

In addition, by limiting the optical lens to satisfy the conditional expression $115deg \leq FOV \leq 125deg$, the optical lens may have a large field of view angle and achieve wide-angle imaging. When the optical lens satisfies $5 < TTL/F < 7$, it may have the characteristic of wide-angle imaging while also achieving miniaturization.

In a second aspect, the present application discloses an image module. The image module includes an imaging sensor and the above-mentioned optical lens, the imaging sensor is arranged on the imaging side of the optical lens

In a third aspect, the present application discloses a terminal device. The terminal device includes a housing and the above-mentioned image module, the image module is arranged in the housing.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical lens of a first embodiment of the present application.
FIG. 2 is a spherical aberration diagram, astigmatism curve diagram and distortion diagram of the optical lens of the first embodiment of the present application.
FIG. 3 is a schematic structure diagram of an optical lens of a second embodiment of the present application.
FIG. 4 is a spherical aberration diagram, astigmatism curve diagram and distortion diagram of the optical lens of the second embodiment of the present application.
FIG. 5 is a schematic structure diagram of an optical lens of a third embodiment of the present application.
FIG. 6 is a spherical aberration diagram, astigmatism curve diagram and distortion diagram of the optical lens of the third embodiment of the present application.
FIG. 7 is a schematic structure diagram of an optical lens of a fourth embodiment of the present application.
FIG. 8 is a spherical aberration diagram, astigmatism curve diagram and distortion diagram of the optical lens of the fourth embodiment of the present application.
FIG. 9 is a schematic structure diagram of an optical lens of a fifth embodiment of the present application.
FIG. 10 is a spherical aberration diagram, astigmatism curve diagram and distortion diagram of the optical lens of the fifth embodiment of the present application.
FIG. 11 is a schematic structure diagram of an optical lens of a sixth embodiment of the present application.
FIG. 12 is a spherical aberration diagram, astigmatism curve diagram and distortion diagram of the optical lens of the sixth embodiment of the present application.
FIG. 13 is a schematic structure diagram of an optical lens of a seventh embodiment of the present application.
FIG. 14 is a spherical aberration diagram, astigmatism curve diagram and distortion diagram of the optical lens of the seventh embodiment of the present application.
FIG. 15 is a schematic diagram of an image module of an embodiment of the present application.
FIG. 16 is a schematic diagram of a terminal device of an embodiment of the present application when the terminal device is a mobile phone.
FIG. 17 is a schematic diagram of the terminal device of an embodiment of the present application when the terminal device is an automobile.

DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

In this invention, terms such as "inner" and "outer" indicate the orientation or positional relationship based on the orientation or positional relationship shown in the attached drawings. These terms are mainly used to better describe the invention and its embodiments, and are not used to limit the indicated devices, components or parts to a specific orientation or to be constructed and operated in a specific orientation.

Furthermore, some of the above terms, in addition to being used to indicate orientation or positional relationship, may also be used to indicate other meanings. For example, the term "upper" may also be used in some cases to indicate a certain attachment relationship or connection relationship. For those skilled in the art, the specific meaning of these terms in this invention can be understood based on the specific circumstances.

In addition, the terms "setting" and "located" should be understood in a broad sense. For those skilled in the art, the specific meaning of these terms in this invention can be understood based on the specific circumstances.

In addition, the terms "first", "second", etc. are mainly used to distinguish different devices, components, or parts (the specific types and constructions may be the same or different), and are not intended to indicate or imply the relative importance and quantity of the indicated devices, components, or parts. Unless otherwise specified, "multiple" means two or more.

The technical solution of the present application will be further explained in conjunction with the embodiments and accompanying drawings.

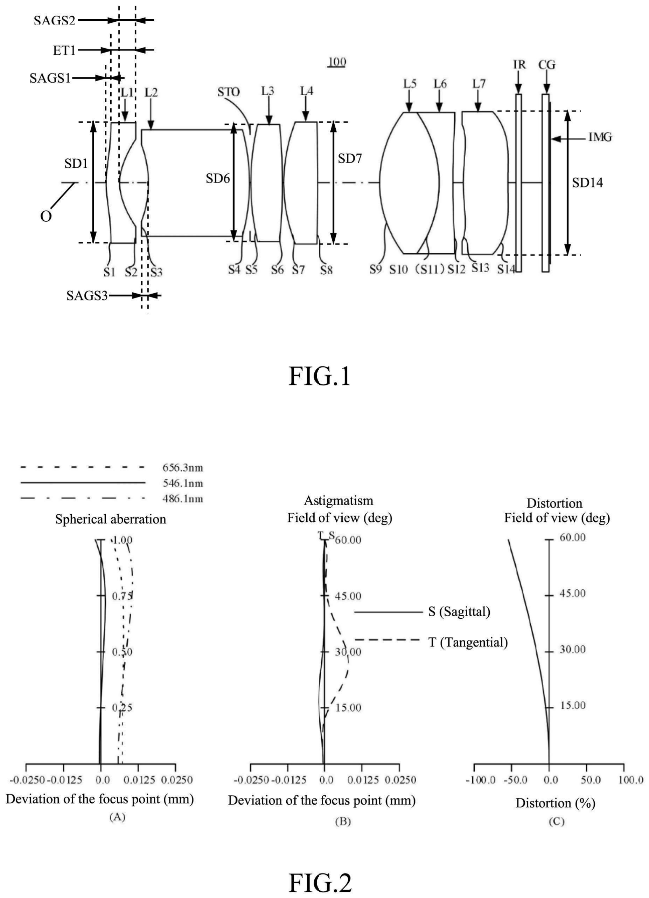

Referring to FIG. 1, in some embodiments of the present application provides an optical lens 100. The optical lens 100 sequentially includes a first lens L1, a second lens L2, a third lens L3, a fourth lens L4, a fifth lens L5, a sixth lens L6, and a seventh lens L7 along an optical axis O from an object side to an imaging side. The first lens L1 has negative refractive power or positive refractive power, the second lens L2 has negative refractive power, the third lens L3 has positive refractive power, the fourth lens L4 has positive refractive power, the fifth lens L5 has positive refractive power, the sixth lens L6 has negative refractive power, the seventh lens L7 has positive refractive power. During imaging, light enters the first lens L1, the second lens L2, the third lens L3, the fourth lens L4, the fifth lens L5, the sixth lens L6, and the seventh lens L7 in that sequence from the object side of the first lens L1 and finally forms an image on an image plane IMG of the optical lens 100.

Further, an object side surface S1 of the first lens L1 is convex near the optical axis O, an imaging side surface S2 of the first lens L1 is concave near the optical axis O, an object side surface S3 of the second lens L2 is concave near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is convex near the optical axis O, an imaging side surface S8 of the fourth lens L4 is convex or concave near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, an imaging side surface S12 of the sixth lens L6 is convex or concave near the optical axis O, an object side surface S13 of the seventh lens L7 is convex near the optical axis O, and an imaging side surface S14 of the seventh lens L7 is concave near the optical axis O.

In some embodiments, the above-mentioned seven lenses may all be made of plastic, which can reduce the overall weight of the optical lens 100 and facilitate the processing of complex surface shapes. In some embodiment, the above-mentioned seven lenses may all be made of glass, or among the above-mentioned seven lenses, some lenses may be made of plastic and some may be made of glass.

In some embodiments, the second lens L2, the third lens L3, the fourth lens L4, the fifth lens L5, and the sixth lens L6 may all be aspheric lenses, and the first lens L1 and the seventh lens L7 may all be spherical lenses. In this way, by combining spherical lenses with aspheric lenses, high-order aberrations can be improved, thereby enhancing the imaging quality. Of course, in other embodiments, the first lens L1 to the seventh lens L7 may all be aspheric lenses, or the first lens L1 to the seventh lens L7 may all be spherical lenses, the specific choice can be adjusted according to the actual imaging requirements, and no specific limitations are made in this embodiment.

In some embodiments, the optical lens 100 may further include an aperture STO, and the aperture STO may be arranged between the second lens L2 and the third lens L3, the method of setting the aperture STO in a center of the optical lens 100 is conducive to the aberration correction of the optical lens 100.

In some embodiments, the optical lens 100 may further include a filter IR, and the filter IR is arranged between the imaging side surface S14 of the seventh lens L7 and the image plane IMG of the optical lens 100. In some embodiments, the filter IR may be an infrared cut-off filter to filter out infrared light and allow visible light to pass through, thereby allowing the imaging more in line with human visual experience. In some embodiments, the filter IR may be an infrared bandpass filter to filter out visible light and allow infrared light to pass through, thereby improving the imaging quality. The optical lens 100 can be used as an infrared optical lens, the optical lens 100 can image and obtain good imaging quality even in dim environments and other special application scenarios. In some embodiments, the filter IR may be made of glass. Of course, in some embodiments, the filter IR may be made of optical glass with a coating, or other materials, and the specific choice can be made according to actual needs, and no specific limitations are made in this embodiment.

In some embodiments, the optical lens 100 may further include a protective glass 120, the protective glass 120 is arranged between the filter IR and the image plane IMG, so that it can be close to an imaging sensor during subsequent assembly and play a protective role.

In some embodiments, the optical lens 100 may satisfy the following conditional expression: $115\mathrm{deg}\leq FOV\leq125\mathrm{deg}$. Wherein, FOV is the maximum field of view angle of the optical lens 100. When the optical lens 100 satisfies the above conditional expression, it can have a wide field of view, thereby achieving wide-angle imaging.

In some embodiments, the optical lens 100 may satisfy the following conditional expression: $FNO<1.7$. Wherein, FNO is an aperture number of the optical lens 100. In this way, the optical lens 100 has a large aperture characteristic, which can increase the light intake of the optical lens 100 and allow the optical lens 100 to be suitable for use at night or in low-light environment. Further, the optical lens 100 may satisfy the following conditional expression: $1.5<FNO<1.7$, thereby meeting the large aperture characteristic of the optical lens 100.

In some embodiments, the optical lens 100 may satisfy the following conditional expression: $5<TTL/F<7$. Wherein, TTL is a distance from the object side surface S1 of the first lens L1 to the image plane IMG of the optical lens 100 along the optical axis O (that is, a total length of the optical lens 100), and F is a focal length of the optical lens 100.

When the optical lens 100 satisfies 5<TTL/F<7, it can have a wide-angle characteristic while also achieving miniaturization. Further, the optical lens 100 may satisfy the following conditional expression: 5.4<TTL/F<6.5, thereby reasonably balancing the design of miniaturization and wide-angle.

In some embodiments, the optical lens 100 may satisfy the following conditional expression: 1.2<F/IMGH<1.5. Wherein, IMGH is half of an image height corresponding to the maximum field of view angle of the optical lens 100. When the optical lens 100 satisfies 1.2<F/IMGH<1.5, it can achieve a wide-angle and large image plane design, thereby allowing high-pixel imaging.

In some embodiments, the optical lens 100 may satisfy the following conditional expression: 7.5<TTL/IMGH<8.5, a relationship between the total length of the optical lens 100 and the image height corresponding to the maximum field of view angle of the optical lens 100 may be reasonably controlled, thereby enabling the optical lens 100 to have a large image plane characteristic while achieving a miniaturized design, which is beneficial for improving the resolution and clarity of the optical lens 100 and achieving high-definition imaging.

In some embodiments, the optical lens 100 may satisfy the following conditional expression: 2<F*tan(FOV/2)/IMGH<2.5. Wherein, tan(FOV/2) is a tangent value of half of the maximum field of view angle of the optical lens 100. When the optical lens 100 satisfies 2<F*tan(FOV/2)/IMGH<2.5, it can achieve a wide-angle and large image plane design of the optical lens 100 while achieving a miniaturized design.

In some embodiments, the optical lens 100 may satisfy the following conditional expression: 0.9<ASAGS1/SAGS1<4. Wherein, ASAGS1 is a sag of a paraxial radius of curvature of the object side surface S1 of the first lens L1, and SAGS1 is a distance along the optical axis from the maximum effective semi-aperture of the object side surface S1 of the first lens L1 to an intersection point of the object side surface S1 of the first lens L1 and the optical axis (i.e., a vector height of the object side surface S1 of the first lens L1). By controlling a ratio of the sag of the paraxial radius of curvature of the object side surface S1 of the first lens L1 to the vector height of the object side surface S1 of the first lens L1, negative refractive power can be provided to the optical lens 100, which is beneficial for controlling an aperture of the first lens L1 and capturing light entering the optical lens 100 at large angles, thereby expanding the field of view angle range of the optical lens 100 and further facilitating the achievement of wide-angle imaging of the optical lens 100.

In some embodiments, the optical lens 100 may satisfy the following conditional expression: 3<TTL/L1ST<4. Wherein, L1ST is a distance along the optical axis from the object side surface S1 of the first lens L1 to the aperture of the optical lens 100. As mentioned above, the aperture is located between the first lens L1 and the second lens L2. When the above conditional expression is satisfied, the distance between the first lens L1 and the aperture of the optical lens 100 may be reasonably controlled, thereby reasonably controlling a field curvature of the optical lens 100 while achieving a miniaturized design of the optical lens 100, which is beneficial for improving the imaging quality of the optical lens 100.

In some embodiments, the optical lens 100 may satisfy the following conditional expression: - 3<SAGS2/SAGS3<-1.5. Wherein, SAGS2 is a distance along the optical axis from the maximum effective semi-aperture of the imaging side surface S2 of the first lens L1 to an intersection point of the imaging side surface S2 of the first lens L1 and the optical axis (i.e., a vector height of the imaging side surface S2 of the first lens L1), and SAGS3 is a distance along the optical axis from the maximum effective semi-aperture of the object side surface S3 of the second lens L2 to an intersection point of the object side surface S3 of the second lens L2 and the optical axis (i.e., a vector height of the object side surface S3 of the second lens L2). When the optical lens 100 satisfies - 3<SAGS2/SAGS3<-1.5, a ratio of the vector height of the imaging side surface S2 of the first lens L1 to the vector height of the object side surface S3 of the second lens L2 may be reasonably controlled, thereby controlling surface shapes of the imaging side surface S2 of the first lens L1 and the object side surface S3 of the second lens L2, so that the surface shapes of the two are not overly curved, which can prevent the occurrence of ghost images and reduce the risk of ghost images.

In some embodiments, the optical lens 100 may satisfy the following conditional expression: CT45/CT34>20. Wherein, CT45 is a distance along the optical axis from the imaging side surface S8 of the fourth lens L4 to the object side surface S9 of the fifth lens L5, and CT34 is a distance along the optical axis from the imaging side surface S6 of the third lens L3 to the object side surface S7 of the fourth lens L4. When the optical lens 100 satisfies CT45/CT34>20, a ratio of the distance between the fourth lens L4 and the fifth lens L5 to the distance between the third lens L3 and the fourth lens L4 may be reasonably controlled, so that there is sufficient distance between the fourth lens L4 and the fifth lens L5, and a lens space of the optical lens 100 may be reasonably arranged, facilitating the assembly of the lenses. Further, the optical lens 100 may satisfy the following conditional expression: 20<CT45/CT34<50, thereby more reasonably controlling the distance between the third lens L3 and the fourth lens L4 and the distance between the fourth lens L4 and the fifth lens L5.

In some embodiments, the optical lens 100 may satisfy the following conditional expression: 70deg<FOV/FNO<80deg, which can reasonably control a ratio of the field of view angle of the optical lens 100 to the aperture number of the optical lens 100, thereby enabling the optical lens 100 to have wide-angle and large-aperture characteristics, achieving wide-angle imaging and increasing the light intake of the optical lens 100, allowing the optical lens 100 to be suitable for use at night or in low-light environment.

In some embodiments, the optical lens 100 may satisfy the following conditional expression: 140deg<FOV*-

F/IMGH<180deg, which can ensure that the optical lens 100 has relatively small optical distortion and image distortion during the imaging process, thereby ensuring imaging quality, facilitating subsequent recognition and determination of imaging details, and providing good imaging assistance for driving assistance.

In some embodiments, the optical lens 100 may satisfy the following conditional expression: -2<F1/F<-1. Wherein, F1 is a focal length of the first lens L1. By controlling a ratio of the focal length of the first lens L1 to the focal length of the optical lens 100, the focal length of the first lens L1 may be reasonably allocated, enabling the first lens L1 to provide negative refractive power, and reasonably distributing the refractive power of the first lens L1, which is beneficial for light convergence and helps reduce the overall spherical aberration, chromatic aberration, and distortion of the first lens L1 to a reasonable level, reducing the design difficulty of subsequent lenses and improving the overall resolution of the optical lens 100, enhancing the peripheral aberration correction of the optical lens 100. Additionally, it is beneficial for reducing a size of the first lens L1, thereby facilitating the formation of a small-sized optical lens 100.

In some embodiments, the optical lens 100 may satisfy the following conditional expression: -8<F2/F<-6.5. Wherein, F2 is a focal length of the second lens L2. By controlling a ratio of the focal length of the second lens L2 to the focal length of the optical lens 100, the focal length of the second lens L2 can be reasonably allocated, thereby reducing an angle of the light incident from the first lens L1, so that the overall resolution of the optical lens 100 is improved and the peripheral aberration correction of the optical lens 100 is enhanced.

In some embodiments, the optical lens 100 may satisfy the following conditional expression: 1.5<F34/F<2.5. Wherein, F34 is a combined focal length of the third lens L3 and the fourth lens L4. When the above conditional expression is satisfied, a ratio of the combined focal length of the third lens L3 and the fourth lens L4 to the focal length of the optical lens 100 may be reasonably controlled, thereby rationally distributing the refractive power of the third lens L3 and the fourth lens L4, which is conducive to providing positive refractive power for the optical lens 100, so that better light convergence ability for the optical lens 100 may be provided, at the same, the distortion of the optical lens 100 may be corrected and the aberration produced by the optical lens 100 may be reduced, thereby improving the imaging quality of the optical lens 100.

In some embodiments, the optical lens 100 may satisfy the following conditional expression: 3<F3/F<6. Wherein, F3 is a focal length of the third lens L3. When the above conditional expression is satisfied, the focal length of the third lens L3 may be reasonably distributed, which enables the third lens L3 to provide positive refractive power for the optical lens 100, thereby providing better light convergence ability for the optical lens 100. At the same time, it can correct the distortion of the optical lens 100 and reduce the aberration produced by the optical lens 100, thereby improving the imaging quality of the optical lens 100.

In some embodiments, the optical lens 100 may satisfy the following conditional expression: 3<F4/F<5. Wherein, F4 is a focal length of the fourth lens L4. When the above conditional expression is satisfied, the focal length of the fourth lens L4 may be reasonably allocated, which enables the fourth lens L4 to provide a positive refractive power to the optical lens 100, thereby providing better light convergence ability for the optical lens 100. At the same time, it can correct the distortion of the optical lens 100 and reduce the aberration generated by the optical lens 100, thereby improving the imaging quality of the optical lens 100.

In some embodiments, the optical lens 100 may satisfy the following conditional expression: 1<F5/F<2. Wherein, F5 is a focal length of the fifth lens L5. When the above conditional expression is satisfied, the focal length of the fifth lens L5 may be reasonably allocated, which enables the fifth lens L5 to provide a positive refractive power to the optical lens 100, thereby providing better light convergence ability for the optical lens 100. At the same time, it can correct the distortion of the optical lens 100 and reduce the aberration generated by the optical lens 100, thereby improving the imaging quality of the optical lens 100.

In some embodiments, the optical lens 100 may satisfy the following conditional expression: -2<F6/F<-1. Wherein, F6 is a focal length of the sixth lens L6. When the above conditional expression is satisfied, the focal length of the sixth lens L6 may be reasonably allocated, which enables the sixth lens L6 to provide a negative refractive power to the optical lens 100, thereby correcting the distortion of the optical lens 100, reducing the aberration generated by the optical lens 100, and improving the imaging quality of the optical lens 100.

In some embodiments, the optical lens 100 may satisfy the following conditional expression: F7/F>4. Wherein, F7 is a focal length of the seventh lens L7. Since the seventh lens L7 provides a positive refractive power to the optical lens 100 and contributes to a main light convergence ability of the lens group of the optical lens 100, by controlling a ratio of the focal length of the seventh lens L7 to the focal length of the optical lens 100, it is beneficial to reasonably allocate the positive optical power of the optical lens 100 and shorten the optical total length of the optical lens 100. When exceeding the upper limit of the above conditional expression, the focal length of the seventh lens L7 becomes larger, thereby resulting in greater light deflection and an increased likelihood of increasing the aberration in the off-axis field of view. When below the lower limit of the above conditional expression, the focal length of the optical lens 100 is too large, and the total length of the optical lens 100 is too long, which is not conducive to the miniaturization design of the optical lens 100. Further, the optical lens 100 may satisfy the following conditional expression: 4<F7/F<20, so that the focal length of the seventh lens L7 is reasonable, which is conducive to the miniaturization design of the optical lens 100.

In some embodiments, the optical lens 100 may satisfy the following conditional expression: 1.5<F/BFL<2.

Wherein, BFL is a distance from the imaging side surface S14 of the seventh lens L7 to the image plane IMG of the optical lens 100 along the optical axis. When the above conditional expression is satisfied, a back focal length of the optical lens 100 can be effectively controlled within a reasonable range, thereby enabling the optical lens 100 to achieve a miniaturized design.

In some embodiments, the optical lens 100 may satisfy the following conditional expression: - 10<F1/CT1<-5. Wherein, CT1 is a thickness of the first lens L1 at the optical axis. When the above conditional expression is satisfied, the refractive power and thickness of the first lens L1 may be reasonably allocated, thereby effectively controlling an incident angle of the light in the optical lens 100, reducing the sensitivity of the optical lens 100, and facilitating the correction of the aberration generated by the optical lens 100, so that the imaging quality of the optical lens 100 is improved.

In some embodiments, the optical lens 100 may satisfy the following conditional expression: - 8<F2/CT2<-4. Wherein, CT2 is a thickness of the second lens L2 at the optical axis. When the above conditional expression is satisfied, the refractive power and the thickness of the second lens L2 may be reasonably allocated, thereby effectively controlling the incident angle of light in the optical lens 100, reducing the sensitivity of the optical lens 100, and facilitating the correction of aberrations produced by the optical lens 100, so that the imaging quality of the optical lens 100 is improved.

In some embodiments, the optical lens 100 may satisfy the following conditional expression: 1<CT2/F<1.5. When the above conditional expression is satisfied, the refractive power and the thickness of the second lens L2 may be reasonably allocated, thereby effectively controlling the deflection angle of light in the optical lens 100, reducing the sensitivity of the optical lens 100, and facilitating the correction of aberrations of the optical lens 100, so that the imaging quality of the optical lens 100 is improved.

In some embodiments, the optical lens 100 may satisfy the following conditional expression: 4<F3/CT3<12. Wherein, CT3 is a thickness of the third lens L3 at the optical axis. When the above conditional expression is satisfied, the refractive power and the thickness of the third lens L3 may be reasonably allocated, thereby allowing the light to enter the optical lens 100 more gently, reducing the sensitivity of the optical lens 100, and facilitating the correction of aberrations produced by the optical lens 100, so that the imaging quality of the optical lens 100 is improved.

In some embodiments, the optical lens 100 may satisfy the following conditional expression: 2<F4/CT4<10. Wherein, CT4 is a thickness of the fourth lens L4 at the optical axis. When the above conditional expression is satisfied, the refractive power and the thickness of the fourth lens L4 may be reasonably allocated, thereby allowing the light to enter the optical lens 100 more gently, reducing the sensitivity of the optical lens 100, and facilitating the correction of aberrations produced by the optical lens 100, so that the imaging quality of the optical lens 100 is improved.

In some embodiments, the optical lens 100 may satisfy the following conditional expression: 1.5<F5/CT5<2.5. Wherein, CT5 is a thickness of the fifth lens L5 at the optical axis. When the above conditional expression is satisfied, the refractive power and the thickness of the fifth lens L5 may be reasonably allocated, thereby allowing the light to enter the optical lens 100 more gently, reducing the sensitivity of the optical lens 100, and facilitating the correction of aberrations produced by the optical lens 100, so that the imaging quality of the optical lens 100 is improved.

In some embodiments, the optical lens 100 may satisfy the following conditional expression: - 12<F6/CT6<-4. Wherein, CT6 is a thickness of the sixth lens L6 at the optical axis. When the above conditional expression is satisfied, the refractive power and the thickness of the sixth lens L6 may be reasonably allocated, thereby allowing the light to enter the optical lens 100 more gently, reducing the sensitivity of the optical lens 100, and facilitating the correction of aberrations produced by the optical lens 100, so that the imaging quality of the optical lens 100 is improved.

In some embodiments, the optical lens 100 may satisfy the following conditional expression: 5<F7/CT7<30. Wherein, CT7 is a thickness of the seventh lens L7 at the optical axis. When the above conditional expression is satisfied, the refractive power and the thickness of the seventh lens L7 may be reasonably allocated, thereby allowing the light to enter the optical lens 100 more gently, reducing the sensitivity of the optical lens 100, and facilitating the correction of aberrations produced by the optical lens 100, so that the imaging quality of the optical lens 100 is improved.

In some embodiments, the optical lens 100 may satisfy the following conditional expression: 2<(R1+R2)/(R1-R2) <4. Wherein, R1 is a radius of curvature of the object side surface S1 of the first lens L1 at the optical axis, and R2 is a radius of curvature of the imaging side surface S2 of the first lens L1 at the optical axis. When the optical lens 100 satisfies the following conditional expression: 2<(R1+R2)/(R1-R2)<4, the radii of curvature of the object side surface S1 and the imaging side surface S2 of the first lens L1 near the optical axis may be reasonably controlled, thereby facilitating the control of the shape of the first lens L1, correcting the aberrations produced by itself, and improving the imaging quality.

In some embodiments, the optical lens 100 may satisfy the following conditional expression: 1<R1/R2<3. When the above conditional expression is satisfied, it is beneficial to control the radii of curvature of the object side surface S1 and the imaging side surface of the first lens L1, so that the surface shapes of the object side surface S1 and the imaging side surface S2 of the first lens L1 will not be too curved, thereby facilitating the control of the shape of the first lens L1.

In some embodiments, the optical lens 100 may satisfy the following conditional expression: 1.5<R4/R3<2. Wherein, R4 is a radius of curvature of the imaging side surface S4 of the second lens L2 at the optical axis, and R3 is a radius of curvature of the object side surface S3 of the second lens L2 at the optical axis. When the above conditional expression is satisfied, it may reasonably control the radii of curvature of the object side surface S3 and the imaging side surface S4 of the second lens L2, so that the surface shapes of the object side surface S3 and the imaging side surface S4 of the second lens L2 will not be too curved, thereby facilitating the control of the shape of the second lens L2.

In some embodiments, the optical lens 100 may satisfy the following conditional expression: - 4<R6/R5<-1. Wherein, R6 is a radius of curvature of the imaging side surface S6 of the third lens L3 at the optical axis, and R5 is a radius of curvature of the object side surface S5 of the third lens L3 at the optical axis. When the above conditional expression is satisfied, it may reasonably control the radii of curvature of the object side surface S5 and the imaging side surface S6 of the third lens L3, so that the surface shapes of the object side surface S5 and the imaging side surface S6 of the third lens L3 will not be too curved, thereby facilitating the control of the shape of the third lens L3.

In some embodiments, the optical lens 100 may satisfy the following conditional expression: |R8/R7|>5. Wherein, R8 is a radius of curvature of the imaging side surface S8 of the fourth lens L4 at the optical axis, and R7 is a radius of curvature of the object side surface S7 of the fourth lens L4 at the optical axis. When the above conditional expression is satisfied, it may reasonably control the radii of curvature of the object side surface S7 and the imaging side surface S8 of the fourth lens L4, so that the surface shapes of the object side surface S7 and the imaging side surface S8 of the fourth lens L4 will not be too curved, thereby facilitating the control of the shape of the fourth lens L4.

In some embodiments, the optical lens 100 may satisfy the following conditional expression: - 0.5<R10/R9<-2. Wherein, R10 is a radius of curvature of the imaging side surface S10 of the fifth lens L5 at the optical axis, and R9 is a radius of curvature of the object side surface S9 of the fifth lens L5 at the optical axis. When the above conditional expression is satisfied, it may reasonably control the radii of curvature of the object side surface S9 and the imaging side surface S10 of the fifth lens L5, so that the surface shapes of the object side surface S9 and the imaging side surface S10 of the fifth lens L5 will not be too curved, thereby facilitating the control of the shape of the fifth lens L5.

In some embodiments, the optical lens 100 may satisfy the following conditional expression: |R12/R11|>5. Wherein, R12 is a radius of curvature of the imaging side surface S12 of the sixth lens L6 at the optical axis, and R11 is a radius of curvature of the object side surface S11 of the sixth lens L6 at the optical axis. When the above conditional expression is satisfied, it may reasonably control the radii of curvature of the object side surface S11 and the imaging side surface S12 of the sixth lens L6, so that the surface shapes of the object side surface S11 and the imaging side surface S12 of the sixth lens L6 will not be too curved, thereby facilitating the control of the shape of the sixth lens L6.

In some embodiments, the optical lens 100 may satisfy the following conditional expression: 1<R14/R13<3. Wherein, R14 is a radius of curvature of the imaging side surface S14 of the seventh lens L7 at the optical axis, and R13 is a radius of curvature of the object side surface S13 of the seventh lens L7 at the optical axis. When the above conditional expression is satisfied, it may reasonably control the radii of curvature of the object side surface S13 and the imaging side surface S14 of the seventh lens L7, so that the surface shapes of the object side surface S13 and the imaging side surface S14 of the seventh lens L7 will not be too curved, thereby facilitating the control of the shape of the seventh lens L7.

In some embodiments, the optical lens 100 may satisfy the following conditional expression: 1.3<ET1/CT1<1.9. Wherein, ET1 is a distance in a direction parallel to the optical axis from the maximum effective semi-aperture of the object side surface S1 of the first lens L1 to the maximum effective semi-aperture on the imaging side surface S2 of the first lens L1 (i.e., an edge thickness of the first lens L1). When the optical lens 100 satisfies the following conditional expression: 1.3<ET1/CT1<1.9, it may reasonably control a ratio of a center thickness to the edge thickness of the first lens L1, thereby allowing the overall thickness of the first lens L1 appropriate and facilitating the miniaturization design of the optical lens 100.

In some embodiments, the optical lens 100 may satisfy the following conditional expression: 5<CTMAX/CTMIX<8. Wherein, CTMAX is the maximum thickness of a lens on the optical axis among the first lens L1 to the seventh lens L7, and CTMIX is the minimum thickness of a lens on the optical axis among the first lens L1 to the seventh lens L7. It can be understood that among the first lens L1 to the seventh lens L7, the second lens L2 is the lens having the maximum thickness on the optical axis, and the first lens L1 is the lens having the minimum thickness on the optical axis. That is, the above CTMAX/CTMIX actually limits a ratio of a center thickness of the second lens L2 to that of the first lens L1. When the optical lens 100 satisfies the following conditional expression: 5<CTMAX/CTMIX<8, it may reasonably control a ratio of the maximum center thickness to the minimum center thickness among the first lens L1 to the seventh lens L7, thereby facilitating the control of the optical power of the first lens L1 and the second lens L2, enabling the aberrations of the first lens L1 and the second lens L2 to compensate for each other, and reducing the aberrations produced by the optical lens 100.

In some embodiments, the optical lens 100 may satisfy the following conditional expression: 4<TTL/CTMAX<7. When the above conditional expression is satisfied, a proportion of the maximum center thickness in the total length of the optical lens 100 may be reasonably allocated, thereby allowing the overall structure of the optical lens 100 compact and facilitating the miniaturization design of the optical lens 100.

In some embodiments, the fifth lens L5 and the sixth lens L6 may form a cemented lens.

On this basis, the optical lens 100 may satisfy the following conditional expression: VD5-VD6>35. Wherein, VD5 is an Abbe number of the fifth lens L5, and VD6 is an Abbe number of the sixth lens L6. When the optical lens 100 satisfies the following conditional expression: VD5-VD6>35, it is beneficial to select appropriate lens materials, thereby effectively correcting chromatic aberration and avoiding severe purple fringing when the optical lens 100 is shooting, which is conducive to improving the imaging clarity and imaging quality of the optical lens 100. Further, the optical lens 100 may satisfy the following conditional expression: 40<VD5-VD6<60, which is further beneficial to improving the imaging quality of the optical lens 100.

The optical lens 100 may satisfy the following conditional expression: -30mm<R10/(N6-N5)<-10mm. Wherein, R10 is the radius of curvature of the imaging side surface S10 of the fifth lens L5 at the optical axis, N6 is a refractive index of the sixth lens L6, and N5 is a refractive index of the fifth lens L5. When the optical lens 100 satisfies the following conditional expression: -30mm<R10/(N6-N5)<-10mm, it is beneficial to select appropriate lens materials, thereby being able to correct chromatic aberration and avoid severe purple fringing when the optical lens 100 is shooting, which is conducive to improving the imaging clarity of the optical lens 100.

The optical lens 100 may satisfy the following conditional expression: 4<F56/F<15. Wherein, F56 is a combined focal length of the fifth lens L5 and the sixth lens L6. When the optical lens 100 satisfies the conditional expression: 4<F56/F<15, it may reasonably control the refractive power of the fifth lens L5 and the sixth lens L6, which avoids the excessive refractive power of the fifth lens L5 and the sixth lens L6 that may cause significant aberration problems in the optical lens 100, thereby improving the imaging quality of the optical lens 100.

In some embodiments, the optical lens 100 may satisfy the following conditional expression: VD3>57.5. Wherein, VD3 is an Abbe number of the third lens L3. When the above conditional expression is satisfied, it is conducive to selecting appropriate lens materials, thereby effectively correcting chromatic aberration. Further, the optical lens 100 may satisfy the following conditional expression: 60<VD3<65.

In some embodiments, the optical lens 100 may satisfy the following conditional expression: $F*R5/(N3-1)$ <295mm². Wherein, R5 is the radius of curvature of the object side surface S5 of the third lens L3 at the optical axis, and N3 is a refractive index of the third lens L3. When the optical lens 100 satisfies the conditional expression: $F*R5/(N3-1)$ <295mm², it may select appropriate lens materials and also reasonably control the refractive power and the radius of curvature of the third lens L3, thereby enabling the third lens L3 to provide an appropriate positive refractive power and avoiding aberration problems caused by excessive refractive power of the third lens L3. Further, the optical lens 100 may satisfy the following conditional expression: 120mm²<$F*R5/(N3-1)$<230mm², thereby further improving the imaging quality of the optical lens 100.

In some embodiments, the optical lens 100 may satisfy the following conditional expression: SD7/SD6>1. Wherein, SD7 is the maximum effective semi-aperture of the object side surface S7 of the fourth lens L4, and SD6 is the maximum effective semi-aperture of the imaging side surface S6 of the third lens L3. When the optical lens 100 satisfies the above conditional expression, it may reasonably control the maximum effective semi-aperture of the imaging side surface S6 of the third lens L3 and the maximum effective semi-aperture of the object side surface S7 of the fourth lens L4, so that a difference in the maximum effective semi-apertures of the third lens L3 and the fourth lens L4 is not too large, thereby reducing a step difference between the third lens L3 and the fourth lens L4, allowing the light to transition more gently between the third lens L3 and the fourth lens L4, reducing the generated aberration, and so that the imaging quality of the optical lens 100 is improved. Further, the optical lens 100 may satisfy the following conditional expression: 1<SD7/SD6<1.2, so that the difference in the maximum effective semi-apertures of the third lens L3 and the fourth lens L4 is appropriate, and the step difference between them is also reasonable, thereby further facilitating the reduction of generated aberration.

In some embodiments, the optical lens 100 may satisfy the following conditional expression: 1.1<SD14/SD1<1.2. Wherein, SD14 is the maximum effective semi-aperture of the imaging side surface S14 of the seventh lens L7, and SD1 is the maximum effective semi-aperture of the object side surface S1 of the first lens L1. When the optical lens 100 satisfies the above conditional expression, it may reasonably control the maximum effective semi-apertures of the object side surface S1 of the first lens L1 and the imaging side surface S14 of the seventh lens L7, thereby facilitating the constraint of the light path of the optical lens 100 and avoiding a large step difference structure between the first lens L1 and the seventh lens L7, reducing the deflection angle of the light, avoiding the introduction of excessive aberration, and facilitating the improvement of the imaging quality and the stability of the assembly of the optical lens 100.

In some embodiments, the optical lens 100 may satisfy the following conditional expression: 2<SD1/IMGH<2.1. When the above conditional expression is satisfied, the maximum effective semi-aperture of the object side surface S1 of the first lens L1 is greater than a size of the image plane IMG, thereby enabling the control of a head diameter of the optical lens 100 while achieving large image surface imaging.

The optical lens 100 of the present disclosure will be described in detail below with reference to specific parameters.

First Embodiment

FIG. 1 is a schematic structural diagram of the optical lens 100 of the first embodiment, the optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.

The first lens L1 has negative refractive power, the second lens L2 has negative refractive power, the third lens L3 has positive refractive power, the fourth lens L4 has positive refractive power, the fifth lens L5 has positive refractive power, the sixth lens L6 has negative refractive power, and the seventh lens L7 has positive refractive power.

In the illustrated embodiment, an object side surface S1 of the first lens L1 is convex near the optical axis, and an imaging side surface S2 of the first lens L1 is concave near the optical axis; an object side surface S3 of the second lens L2 is concave near the optical axis, and an imaging side surface S4 of the second lens L2 is convex near the optical axis; an object side surface S5 of the third lens L3 is convex near the optical axis, and an imaging side surface S6 of the third lens L3 is convex near the optical axis; an object side surface S7 of the fourth lens L4 is convex near the optical axis, and an imaging side surface S8 of the fourth lens L4 is convex near the optical axis; an object side surface S9 and an imaging side surface S10 of the fifth lens L5 are both convex near the optical axis; an object side surface S11 of the sixth lens L6 is concave near the optical axis, and an imaging side surface S12 of the sixth lens L6 is concave near the optical axis; an object side surface S13 of the seventh lens L7 is convex near the optical axis, and an imaging side surface S14 of the seventh lens is concave near the optical axis.

In the illustrated embodiment, taking a focal length F of the optical lens 100 as 5.1167mm, an aperture number FNO of the optical lens 100 as 1.605, and the maximum field of view angle FOV of the optical lens 100 as 120deg as an example, and taking a total length TTL of the optical lens as 33.0mm as an example, other parameters of the optical lens 100 are given in Table 1. The components along the optical axis of the optical lens 100 from the object side to the image side are arranged in the order from top to bottom in Table 1. In the same lens, a surface with a smaller surface number is the object side surface of the lens, and a surface with a larger surface number is the imaging side surface of the lens. For example, surface numbers 1 and 2 correspond to the object side surface S1 and imaging side surface S2 of the first lens L1, respectively. The Y radius in Table 1 is the radius of curvature of the object side surface or the imaging side surface with the corresponding surface number at the optical axis. The first value in the "thickness" parameter column of the lens is the thickness of the lens at the optical axis, and the second value is a distance from the imaging side surface of the lens to a rear surface in an imaging side direction on the optical axis. The value of the aperture STO in the "Thickness" parameter column is a distance from the aperture STO to a vertex of a latter surface in an imaging side direction (the vertex refers to an intersection of the latter surface and the optical axis) on the optical axis. By default, a direction from the object side surface of the first lens L1 to the imaging side surface of the last lens is a positive direction of the optical axis. When the value of the aperture STO in the "Thickness" parameter column is negative, it indicates that the aperture STO is arranged on the image side of the vertex of the latter surface. When the value of the aperture STO in the "Thickness" parameter column is a positive value, the aperture STO is arranged on the object side of the vertex of the latter surface. It can be understood that the units of the Y radius, thickness, and focal length in Table 1 are all mm. Moreover, the refractive index, Abbe number, etc. in Table 1 are obtained at the reference wavelength of 587.6nm, and the focal length is obtained at the reference wavelength of 546.1nm.

In the first embodiment, the object side surfaces and the imaging side surfaces of the second lens L2 and the sixth lens L6 are aspheric surfaces. The surface shape x of each aspheric lens can be defined by, but not limited to, the following aspherical formula:

$$x = \frac{ch^2}{1+\sqrt{1-(K+1)c^2h^2}} + \sum Aih^i \;;$$

Wherein, x is a height distance along the optical axis from a position of the aspheric surface at height h to the vertex of the aspheric surface; c is a curvature of the vertex of the aspheric surface, and c=1/Y (that is, the curvature of the vertex of the aspheric surface c is the reciprocal of the Y radius in the above Table 1); K is the cone coefficient; Ai is the coefficient corresponding to the i-th higher-order term of the aspheric surface. Table 2 shows the higher-order term coefficients A4, A6, A8, A10, A12, A14, A16, A18, and A20 of the aspheric surfaces of the first lens L1 to the seventh lens L7.

Table 1

| First embodiment | | | | | | | | |
|---|---|---|---|---|---|---|---|---|
| F=5.1167mm, FNO=1.605, FOV=120deg, TTL=33.0mm | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | asphere | 8.033 | 1.000 | glass | 1.85135 | 40.1 | -8.323 |
| 2 | | asphere | 3.549 | 2.134 | | | | |
| 3 | Second lens | sphere | -8.135 | 7.500 | glass | 1.87070 | 40.7 | -39.024 |
| 4 | | sphere | -15.285 | 0.045 | | | | |
| STO | Aperture | sphere | infinity | 0.055 | | | | |
| 5 | Third lens | sphere | 18.898 | 2.344 | glass | 1.58913 | 61.3 | 22.735 |
| 6 | | sphere | -43.868 | 0.100 | | | | |
| 7 | Fourth lens | sphere | 12.418 | 2.510 | glass | 1.59349 | 67.0 | 19.911 |
| 8 | | sphere | -225.646 | 4.651 | | | | |
| 9 | Fifth lens | sphere | 8.652 | 4.413 | glass | 1.61800 | 63.4 | 7.941 |
| 11 | Sixth lens | sphere | -9.130 | 1.020 | glass | 1.94595 | 18.0 | -8.485 |
| 12 | | sphere | 70.000 | 0.778 | | | | |
| 13 | Seventh lens | asphere | 16.539 | 3.300 | glass | 1.80610 | 40.7 | 30.071 |
| 14 | | asphere | 47.424 | 0.600 | | | | |
| 15 | Filter | sphere | infinity | 0.400 | glass | 1.51680 | 64.2 | |
| 16 | | sphere | infinity | 1.550 | | | | |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

Table 2

| First embodiment | | | | | |
|---|---|---|---|---|---|
| Surface number | K | A4 | A6 | A8 | A10 |
| 1 | -2.67762E+00 | -4.54426E-03 | 2.02519E-04 | 8.62710E-07 | -8.67636E-07 |
| 2 | -5.80710E-02 | -8.24272E-03 | 2.55842E-04 | 5.81457E-07 | -6.46055E-06 |
| 13 | 0.00000E+00 | -1.34154E-03 | -4.45104E-05 | 4.80298E-06 | -7.02106E-07 |
| 14 | 0.00000E+00 | -1.81118E-03 | -3.46388E-05 | 4.12380E-06 | -3.75735E-07 |
| Surface number | A12 | A14 | A16 | A18 | A20 |
| 1 | 7.59058E-08 | -3.77746E-09 | 1.06589E-10 | -1.29898E-12 | 0.00000E+00 |
| 2 | 1.39742E-06 | -1.74121E-07 | 1.13063E-08 | -3.19487E-10 | 0.00000E+00 |
| 13 | 5.88535E-08 | -3.07399E-09 | 9.60393E-11 | -1.34552E-12 | 0.00000E+00 |
| 14 | 2.71712E-08 | -1.18910E-09 | 2.82324E-11 | -2.85696E-13 | 0.00000E+00 |

Referring to (A) of FIG. 2, (A) of FIG. 2 is the spherical aberration diagram of the optical lens 100 in the first embodiment at wavelengths of 656.3nm, 546.1nm, and 486.1nm. The abscissa along the X-axis direction represents the deviation of the focus point in mm, and the ordinate along the Y-axis direction represents the normalized field of view. It can be seen from (A) of FIG. 2 that the spherical aberration value of the optical lens 100 in the first embodiment is well, indicating that the imaging quality of the optical lens 100 in this embodiment is well.

Referring to (B) of FIG. 2, (B) of FIG. 2 is an astigmatism curve diagram of the optical lens 100 in the first embodiment at a wavelength of 546.1nm. The abscissa along the X-axis direction represents the deviation of the focus point in mm, and the ordinate along the Y-axis represents the field of view angle with units of deg. T in the astigmatism curve diagram represents the curvature of the image plane IMG in the tangential direction, and S represents the curvature of the image plane IMG in the sagittal direction. It can be seen from (B) of FIG. 2 that at this wavelength, the field curvature of the optical lens 100 is small, the field curvature and astigmatism of each field of view have been well corrected, both the center and the edge of the field of view have clear imaging, indicating that the astigmatism of the optical lens 100 has been well compensated.

Referring to (C) of FIG. 2, (C) of FIG. 2 is a distortion diagram of the optical lens 100 in the first embodiment at a wavelength of 546.1nm. The abscissa along the X-axis direction represents the distortion, and the ordinate along the Y-axis direction represents the field of view angle with the unit of deg. It can be seen from (C) of FIG. 2 that at this wavelength, the image distortion caused by the main beam is small, and the distortion of the optical lens 100 has been well corrected.

Second Embodiment

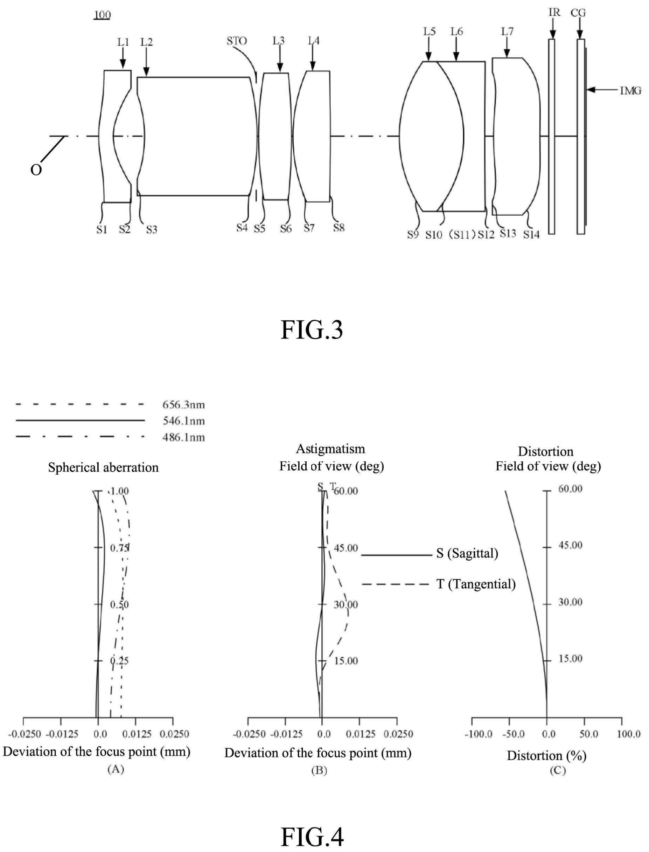

FIG. 3 is a schematic structural diagram of the optical lens 100 of the second embodiment, the optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.

In the second embodiment, the refractive power design of the first lens L1 to the seventh lens L7 is the same as that in the first embodiment, and the surface shape design of the first lens L1 to the seventh lens L7 is also the same as that in the first embodiment. Therefore, no further description is provided here.

The other parameters of the optical lens 100 are given in Table 3. The definitions of each parameter can be obtained from the description of the previous embodiment, which will not be repeated here.

Table 3

| Second embodiment | | | | | | | | |
|---|---|---|---|---|---|---|---|---|
| F=5.234mm, FNO=1.601, FOV=120deg, TTL=33.3614mm | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | asphere | 7.129 | 1.000 | glass | 1.85135 | 40.1 | -8.475 |
| 2 | | asphere | 3.355 | 2.139 | | | | |
| 3 | Second lens | sphere | -8.526 | 7.697 | glass | 2.00100 | 29.1 | -38.667 |
| 4 | | sphere | -15.873 | -0.064 | | | | |
| STO | Aperture | sphere | infinity | 0.164 | | | | |
| 5 | Third lens | sphere | 25.396 | 2.247 | glass | 1.61800 | 63.4 | 26.225 |
| 6 | | sphere | -43.277 | 0.100 | | | | |
| 7 | Fourth lens | sphere | 10.999 | 2.606 | glass | 1.59349 | 67.0 | 17.565 |
| 8 | | sphere | -182.100 | 4.714 | | | | |
| 9 | Fifth lens | sphere | 8.829 | 4.403 | glass | 1.61800 | 63.4 | 7.477 |
| 11 | Sixth lens | sphere | -7.848 | 1.436 | glass | 2.00272 | 19.3 | -7.700 |
| 12 | | sphere | 521.545 | 0.598 | | | | |
| 13 | Seventh lens | asphere | 17.146 | 3.171 | glass | 1.80610 | 40.7 | 31.835 |
| 14 | | asphere | 47.403 | 0.600 | | | | |
| 15 | Filter | sphere | infinity | 0.400 | glass | 1.51680 | 64.2 | |
| 16 | | sphere | infinity | 1.550 | | | | |

(continued)

| Second embodiment | | | | | | | | |
|---|---|---|---|---|---|---|---|---|
| F=5.234mm, FNO=1.601, FOV=120deg, TTL=33.3614mm | | | | | | | | |
| Surface number | Surface name | Surface type | Y radius | Thickness | Material | Refractive index | Abbe number | Focal length |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

In the second embodiment, Table 4 shows the higher-order term coefficients that can be used for each aspherical lens in the second embodiment, wherein, each aspherical surface shape can be defined by the formula given in the first embodiment.

Table 4

| Second embodiment | | | | | |
|---|---|---|---|---|---|
| Surface number | K | A4 | A6 | A8 | A10 |
| 1 | -3.27731E+00 | -4.88964E-03 | 1.80270E-04 | 7.79659E-06 | -1.50289E-06 |
| 2 | -1.23918E-01 | -9.70054E-03 | 2.52216E-04 | 1.88808E-05 | -1.21232E-05 |
| 13 | 0.00000E+00 | -1.27729E-03 | -4.56707E-05 | 7.07870E-06 | -1.09401E-06 |
| 14 | 0.00000E+00 | -1.96094E-03 | -2.07628E-05 | 3.96881E-06 | -4.62726E-07 |
| Surface number | A12 | A14 | A16 | A18 | A20 |
| 1 | 1.07930E-07 | -4.68514E-09 | 1.18470E-10 | -1.32011E-12 | 0.00000E+00 |
| 2 | 2.46050E-06 | -3.02098E-07 | 1.97859E-08 | -5.63526E-10 | 0.00000E+00 |
| 13 | 9.53240E-08 | -5.00237E-09 | 1.48352E-10 | -1.91369E-12 | 0.00000E+00 |
| 14 | 3.55302E-08 | -1.56583E-09 | 3.66389E-11 | -3.58793E-13 | 0.00000E+00 |

Referring to FIG. 4, it can be seen from (A) a spherical aberration diagram, (B) an astigmatism curve diagram, and (C) a distortion diagram in FIG. 4 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 4, (B) in Figure 4, and (C) in Figure 4, please refer to the contents described in (A) in Figure 2, (B) in Figure 2, and (C) in Figure 2 in the first embodiment and will not be described again here.

Third Embodiment

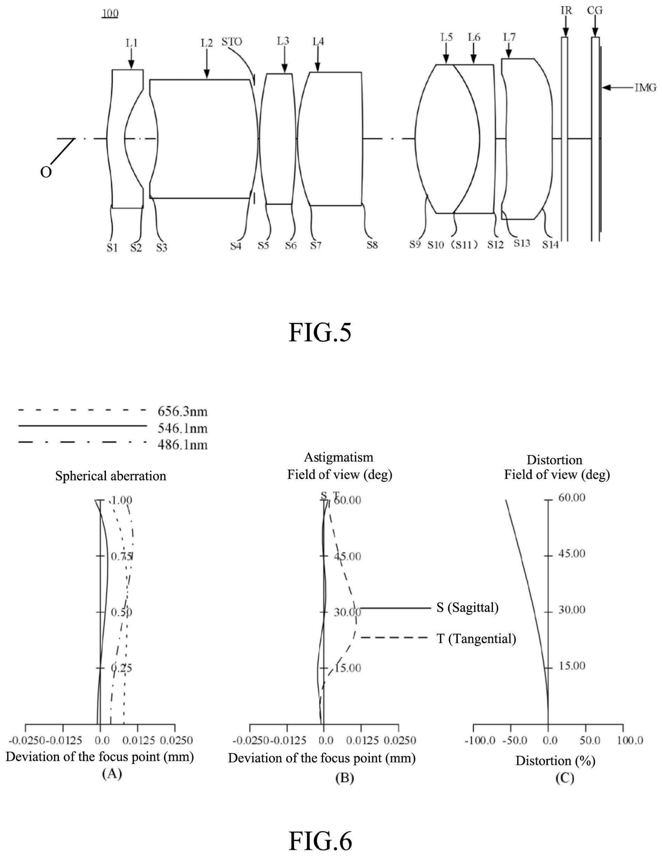

FIG. 5 is a schematic structural diagram of the optical lens 100 of the third embodiment, the optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.

In the illustrated embodiment, the refractive power design of the first lens L1 to the seventh lens L7 is the same as that in the first embodiment.

In the surface shape design of the first lens L1 to the seventh lens L7, except that the imaging side surface S12 of the sixth lens L6 is convex near the optical axis, the surface shape design of the other lenses is the same as that in the first embodiment. Therefore, no further description is provided here.

The other parameters of the optical lens 100 are given in Table 5. The definitions of each parameter can be obtained from the description of the previous embodiment, which will not be repeated here.

Table 5

| Third embodiment | | | | | | | | |
|---|---|---|---|---|---|---|---|---|
| F=5.389mm, FNO=1.604, FOV=120deg, TTL=32.0mm | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | asphere | 7.181 | 1.150 | glass | 1.85135 | 40.1 | -8.258 |
| 2 | | asphere | 3.291 | 2.152 | | | | |
| 3 | Second lens | sphere | -8.096 | 6.476 | glass | **1.91082** | 35.3 | -41.595 |
| 4 | | sphere | -14.222 | -0.233 | | | | |
| STO | Aperture | sphere | infinity | 0.333 | | | | |
| 5 | Third lens | sphere | 19.017 | 2.355 | glass | 1.61800 | 63.4 | 20.169 |
| 6 | | sphere | -34.463 | 0.100 | | | | |
| 7 | Fourth lens | sphere | 12.012 | 4.269 | glass | 1.59349 | 67.0 | 18.468 |
| 8 | | sphere | -108.645 | 3.385 | | | | |
| 9 | Fifth lens | sphere | 9.173 | 4.169 | glass | 1.61800 | 63.4 | 7.420 |
| 11 | Sixth lens | sphere | -7.577 | 1.033 | glass | 1.94595 | 18.0 | -8.866 |
| 12 | | sphere | -83.640 | 0.675 | | | | |
| 13 | Seventh lens | asphere | 28.308 | 2.987 | glass | 1.80610 | 40.7 | 80.576 |
| 14 | | asphere | 47.812 | 0.600 | | | | |
| 15 | Filter | sphere | infinity | 0.400 | glass | 1.51680 | 64.2 | |
| 16 | | sphere | infinity | 1.550 | | | | |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

In the third embodiment, Table 6 shows the higher-order term coefficients that can be used for each aspherical lens in the third embodiment, wherein, each aspherical surface shape can be defined by the formula given in the first embodiment.

Table 6

| Third embodiment | | | | | |
|---|---|---|---|---|---|
| Surface number | K | A4 | A6 | A8 | A10 |
| 1 | -3.42434E+00 | -4.29190E-03 | 7.53387E-05 | 1.70392E-05 | -2.19091E-06 |
| 2 | -1.30167E-01 | -9.37626E-03 | 7.53277E-05 | 5.38454E-05 | -1.95171E-05 |
| 13 | 0.00000E+00 | -1.51741E-03 | -4.36904E-05 | 8.80468E-06 | -1.43121E-06 |
| 14 | 0.00000E+00 | -2.44730E-03 | 2.34799E-06 | 3.96574E-06 | -5.53519E-07 |
| Surface number | A12 | A14 | A16 | A18 | A20 |
| 1 | 1.57261E-07 | -7.37000E-09 | 2.03098E-10 | -2.43683E-12 | 0.00000E+00 |
| 2 | 3.66012E-06 | -4.29780E-07 | 2.74575E-08 | -7.71056E-10 | 0.00000E+00 |
| 13 | 1.31357E-07 | -7.15574E-09 | 2.16199E-10 | -2.79574E-12 | 0.00000E+00 |
| 14 | 4.47933E-08 | -2.06877E-09 | 5.07431E-11 | -5.17099E-13 | 0.00000E+00 |

Referring to FIG. 6, it can be seen from (A) a spherical aberration diagram, (B) an astigmatism curve diagram, and (C) a distortion diagram in FIG. 6 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 6, (B) in Figure 6, and (C) in Figure 6, please refer to the contents described in (A) in Figure 2, (B) in Figure 2, and (C) in Figure 2 in the first embodiment and will not be described again here.

Fourth Embodiment

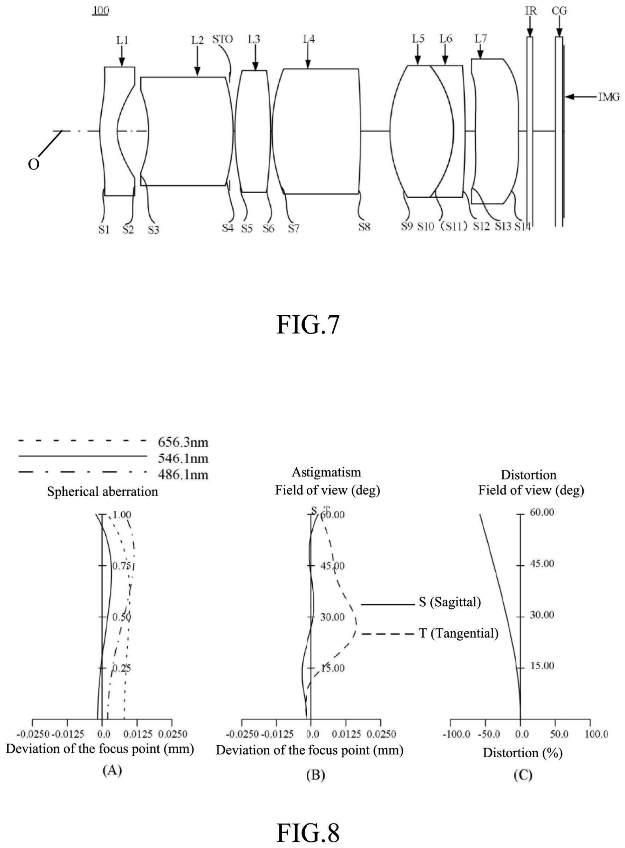

FIG. 7 is a schematic structural diagram of the optical lens 100 of the fourth embodiment, the optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.

In the illustrated embodiment, the refractive power design of the first lens L1 to the seventh lens L7 is the same as that in the first embodiment. In the surface shape design of the first lens L1 to the seventh lens L7, except that the imaging side surface S12 of the sixth lens L6 is convex near the optical axis, the surface shape design of the other lenses is the same as that in the first embodiment. Therefore, no further description is provided here.

The other parameters of the optical lens 100 are given in Table 7. The definitions of each parameter can be obtained from the description of the previous embodiment, which will not be repeated here.

Table 7

| Surface number | Surface name | Surface type | Y radius | Thickness | Material | Refractive index | Abbe number | Focal length |
|---|---|---|---|---|---|---|---|---|
| Fourth embodiment |
| F=5.539mm, FNO=1.600, FOV=120deg, TTL=32.000mm |
| OBJ | Object side | sphere | infinity | infinity | | | | |
| 1 | First lens | asphere | 7.013 | 1.193 | glass | 1.85135 | 40.1 | -8.318 |
| 2 | | asphere | 3.248 | 2.168 | | | | |
| 3 | Second lens | sphere | -7.931 | 5.818 | glass | 1.91082 | 35.3 | -43.295 |
| 4 | | sphere | -13.399 | -0.243 | | | | |
| STO | Aperture | sphere | infinity | 0.370 | | | | |
| 5 | Third lens | sphere | 18.563 | 2.453 | glass | 1.61800 | 63.4 | 19.449 |
| 6 | | sphere | -32.378 | 0.100 | | | | |
| 7 | Fourth lens | sphere | 12.297 | 6.141 | glass | 1.59349 | 67.0 | 17.963 |
| 8 | | sphere | -65.219 | 2.026 | | | | |
| 9 | Fifth lens | sphere | 9.316 | 4.372 | glass | 1.61800 | 63.4 | 7.352 |
| 11 | Sixth lens | sphere | -7.280 | 0.800 | glass | 1.94595 | 18.0 | -8.930 |
| 12 | | sphere | -55.484 | 0.703 | | | | |
| 13 | Seventh lens | asphere | 37.792 | 2.949 | glass | 1.80610 | 40.7 | 23.176 |
| 14 | | asphere | 47.672 | 0.600 | | | | |
| 15 | Filter | sphere | infinity | 0.400 | glass | 1.51680 | 64.2 | |
| 16 | | sphere | infinity | 1.550 | | | | |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

In the fourth embodiment, Table 8 shows the higher-order term coefficients that can be used for each aspherical lens in the fourth embodiment, wherein, each aspherical surface shape can be defined by the formula given in the first embodiment.

**EP 4 679 157 A2**

Table 8

| Fourth embodiment | | | | | |
|---|---|---|---|---|---|
| Surface number | K | A4 | A6 | A8 | A10 |
| 1 | -3.71531E+00 | -4.08029E-03 | -1.52689E-05 | 3.24119E-05 | -3.97618E-06 |
| 2 | -1.44808E-01 | -9.63600E-03 | -1.38189E-05 | 7.06595E-05 | -2.07362E-05 |
| 13 | 0.00000E+00 | -1.62839E-03 | 6.78669E-06 | -3.75056E-06 | 6.29859E-07 |
| 14 | 0.00000E+00 | -2.68165E-03 | 2.92812E-05 | 3.92149E-07 | -6.47151E-08 |
| Surface number | A12 | A14 | A16 | A18 | A20 |
| 1 | 3.01159E-07 | -1.47676E-08 | 4.16840E-10 | -5.05498E-12 | 0.00000E+00 |
| 2 | 3.58361E-06 | -4.06663E-07 | 2.56371E-08 | -7.24509E-10 | 0.00000E+00 |
| 13 | -6.73766E-08 | 4.03784E-09 | -1.24746E-10 | 1.54242E-12 | 0.00000E+00 |
| 14 | 3.55208E-09 | -9.22752E-11 | 6.50693E-13 | 6.07247E-15 | 0.00000E+00 |

Referring to FIG. 8, it can be seen from (A) a spherical aberration diagram, (B) an astigmatism curve diagram, and (C) a distortion diagram in FIG. 8 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 8, (B) in Figure 8, and (C) in Figure 8, please refer to the contents described in (A) in Figure 2, (B) in Figure 2, and (C) in Figure 2 in the first embodiment and will not be described again here.

Fifth Embodiment

The optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.
In the illustrated embodiment, the refractive power design of the first lens L1 to the seventh lens L7 is the same as that in the first embodiment.
In the surface shape design of the first lens L1 to the seventh lens L7, except that the imaging side surface S12 of the sixth lens L6 is convex near the optical axis, the surface shape design of the other lenses is the same as that in the first embodiment. Therefore, no further description is provided here.

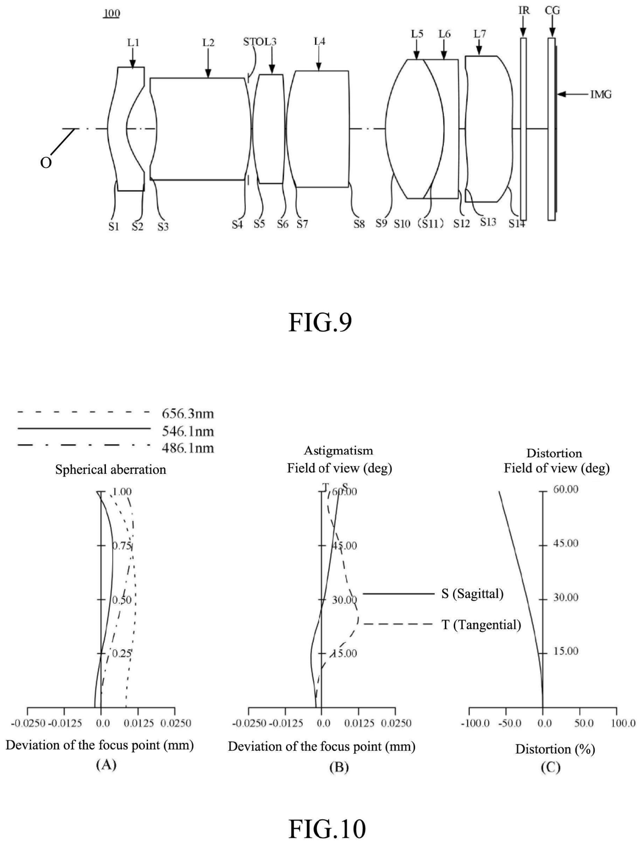

FIG. 9 is a schematic structural diagram of the optical lens 100 of the fifth embodiment. The other parameters of the optical lens 100 are given in Table 9. The definitions of each parameter can be obtained from the description of the previous embodiment, which will not be repeated here.

Table 9

| Fifth embodiment | | | | | | | | |
|---|---|---|---|---|---|---|---|---|
| F=5.7365mm, FNO=1.609, FOV=120deg, TTL=32.000mm | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | asphere | 5.279 | 1.351 | glass | 1.85135 | 40.1 | -10.460 |
| 2 | | asphere | 2.924 | 2.158 | | | | |
| 3 | Second lens | sphere | -7.857 | 6.712 | glass | 1.90043 | 37.4 | -38.991 |
| 4 | | sphere | -14.219 | -0.201 | | | | |
| STO | Aperture | sphere | infinity | 0.301 | | | | |
| 5 | Third lens | sphere | 16.085 | 2.304 | glass | 1.61800 | 63.4 | 20.156 |
| 6 | | sphere | -52.195 | 0.100 | | | | |

(continued)

| Fifth embodiment | | | | | | | | |
|---|---|---|---|---|---|---|---|---|
| F=5.7365mm, FNO=1.609, FOV=120deg, TTL=32.000mm | | | | | | | | |
| Surface number | Surface name | Surface type | Y radius | Thickness | Material | Refractive index | Abbe number | Focal length |
| 7 | Fourth lens | sphere | 13.760 | 4.547 | glass | 1.59349 | 67.0 | 21.010 |
| 8 | | sphere | -116.567 | 2.555 | | | | |
| 9 | Fifth lens | sphere | 8.878 | 4.176 | glass | 1.59349 | 67.0 | 8.347 |
| 11 | Sixth lens | sphere | -9.244 | 1.053 | glass | 1.94595 | 18.0 | -10.160 |
| 12 | | sphere | -256.067 | 0.459 | | | | |
| 13 | Seventh lens | asphere | 16.179 | 3.335 | glass | 1.69350 | 53.2 | 26.058 |
| 14 | | asphere | 30.096 | 0.600 | | | | |
| 15 | Filter | sphere | infinity | 0.400 | glass | 1.51680 | 64.2 | |
| 16 | | sphere | infinity | 1.550 | | | | |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

In the fifth embodiment, Table 10 shows the higher-order term coefficients that can be used for each aspherical lens in the fifth embodiment, wherein, each aspherical surface shape can be defined by the formula given in the first embodiment.

Table 10

| Fifth embodiment | | | | |
|---|---|---|---|---|
| Surface number | K | A4 | A6 | A8 | A10 |
| 1 | -2.75327E+00 | -2.14173E-03 | -1.67308E-04 | 2.32819E-05 | -1.69780E-06 |
| 2 | -2.38995E-01 | -8.98298E-03 | -5.35637E-04 | 1.81126E-04 | -5.57282E-05 |
| 13 | 0.00000E+00 | -1.24209E-03 | -3.04918E-05 | 7.22103E-06 | -1.29354E-06 |
| 14 | 0.00000E+00 | -2.54427E-03 | 3.83896E-05 | 5.29732E-07 | -4.31546E-07 |
| Surface number | A12 | A14 | A16 | A18 | A20 |
| 1 | 1.15519E-07 | -6.16818E-09 | 1.89460E-10 | -2.38671E-12 | 0.00000E+00 |
| 2 | 1.11289E-05 | -1.38252E-06 | 9.40103E-08 | -2.78687E-09 | 0.00000E+00 |
| 13 | 1.20515E-07 | -6.52439E-09 | 1.93670E-10 | -2.43340E-12 | 0.00000E+00 |
| 14 | 4.63380E-08 | -2.35338E-09 | 6.03167E-11 | -6.31639E-13 | 0.00000E+00 |

Referring to FIG. 10, it can be seen from (A) a spherical aberration diagram, (B) an astigmatism curve diagram, and (C) a distortion diagram in FIG. 10 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 2, (B) in Figure 2, and (C) in Figure 2 in the first embodiment and will not be described again here.

Sixth embodiment

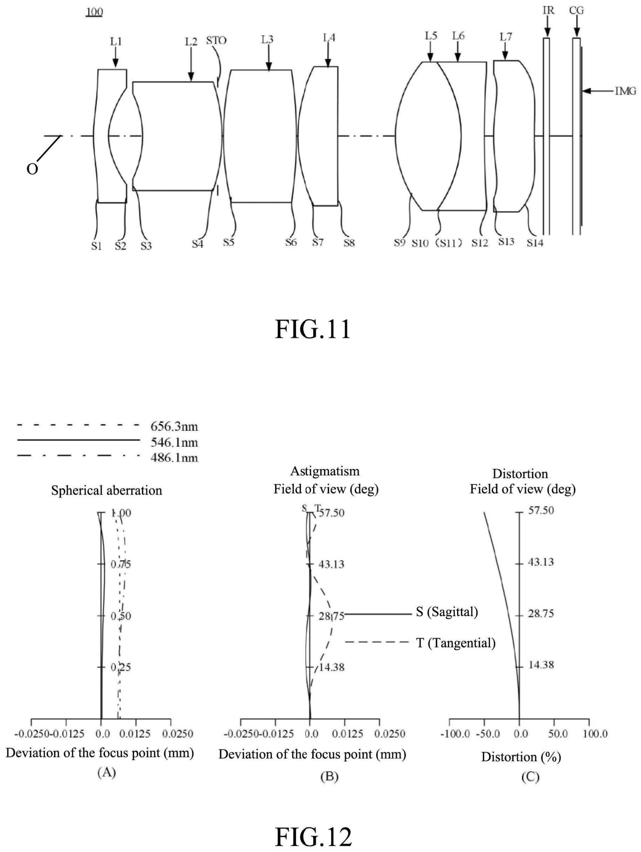

Referring to FIG. 11, an optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.

In the illustrated embodiment, the refractive power design of the first lens L1 to the seventh lens L7 is the same as that in the first embodiment.

In the surface shape design of the first lens L1 to the seventh lens L7, except that the imaging side surface S8 of the fourth lens L4 is concave near the optical axis, the surface shape design of the other lenses is the same as that in the first embodiment. Therefore, no further description is provided here.

FIG. 11 is a schematic structural diagram of the optical lens 100 of the sixth embodiment. The other parameters of the optical lens 100 are given in Table 11. The definitions of each parameter can be obtained from the description of the previous embodiment, which will not be repeated here.

Table 11

| Sixth embodiment | | | | | | | | |
|---|---|---|---|---|---|---|---|---|
| F=5.1657mm, FNO=1.610, FOV=115deg, TTL=32.477mm | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | asphere | 8.980 | 1.005 | glass | 1.85135 | 40.1 | -7.810 |
| 2 | | asphere | 3.624 | 2.261 | | | | |
| 3 | Second lens | sphere | -6.716 | 5.277 | glass | 1.87070 | 40.7 | -36.348 |
| 4 | | sphere | -11.643 | -0.282 | | | | |
| STO | Aperture | sphere | infinity | 0.382 | | | | |
| 5 | Third lens | sphere | 19.953 | 4.849 | glass | 1.61800 | 63.4 | 20.200 |
| 6 | | sphere | -30.254 | 0.100 | | | | |
| 7 | Fourth lens | sphere | 10.424 | 2.685 | glass | 1.59349 | 67.0 | 17.844 |
| 8 | | sphere | 600.000 | 3.835 | | | | |
| 9 | Fifth lens | sphere | 7.872 | 4.365 | glass | 1.55032 | 75.5 | 8.183 |
| 11 | Sixth lens | sphere | -8.451 | 1.544 | glass | 2.00272 | 19.3 | -7.475 |
| 12 | | sphere | 72.350 | 0.614 | | | | |
| 13 | Seventh lens | asphere | 12.471 | 2.706 | glass | 1.80610 | 40.7 | 23.544 |
| 14 | | asphere | 32.844 | 0.600 | | | | |
| 15 | Filter | sphere | infinity | 0.400 | glass | 1.51680 | 64.2 | |
| 16 | | sphere | infinity | 1.550 | | | | |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

In the sixth embodiment, Table 12 shows the higher-order term coefficients that can be used for each aspherical lens in the sixth embodiment, wherein, each aspherical surface shape can be defined by the formula given in the first embodiment.

Table 12

| Sixth embodiment | | | | | |
|---|---|---|---|---|---|
| Surface number | K | A4 | A6 | A8 | A10 |
| 1 | -3.27031E+00 | -4.67107E-03 | 2.69522E-04 | -9.03910E-06 | 3.31390E-07 |
| 2 | -6.73480E-02 | -8.16688E-03 | 3.81982E-04 | -2.99406E-05 | 1.20905E-07 |
| 13 | 0.00000E+00 | -1.51348E-03 | -6.96082E-05 | 7.33413E-06 | -1.16107E-06 |

(continued)

| Sixth embodiment | | | | | |
|---|---|---|---|---|---|
| Surface number | K | A4 | A6 | A8 | A10 |
| 14 | 0.00000E+00 | -1.79354E-03 | -7.43099E-05 | 7.02942E-06 | -6.22184E-07 |
| Surface number | A12 | A14 | A16 | A18 | A20 |
| 1 | -2.60311E-08 | 1.55922E-09 | -4.60862E-11 | 5.21003E-13 | 0.00000E+00 |
| 2 | 5.75970E-07 | -1.12305E-07 | 8.69123E-09 | -2.61871E-10 | 0.00000E+00 |
| 13 | 1.13220E-07 | -7.17387E-09 | 2.67615E-10 | -4.26436E-12 | 0.00000E+00 |
| 14 | 4.55067E-08 | -2.11438E-09 | 5.58878E-11 | -6.48829E-13 | 0.00000E+00 |

Referring to FIG. 12, it can be seen from (A) a spherical aberration diagram, (B) an astigmatism curve diagram, and (C) a distortion diagram in FIG. 12 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 12, (B) in Figure 12, and (C) in Figure 12, please refer to the contents described in (A) in Figure 2, (B) in Figure 2, and (C) in Figure 2 in the first embodiment and will not be described again here.

Seventh embodiment

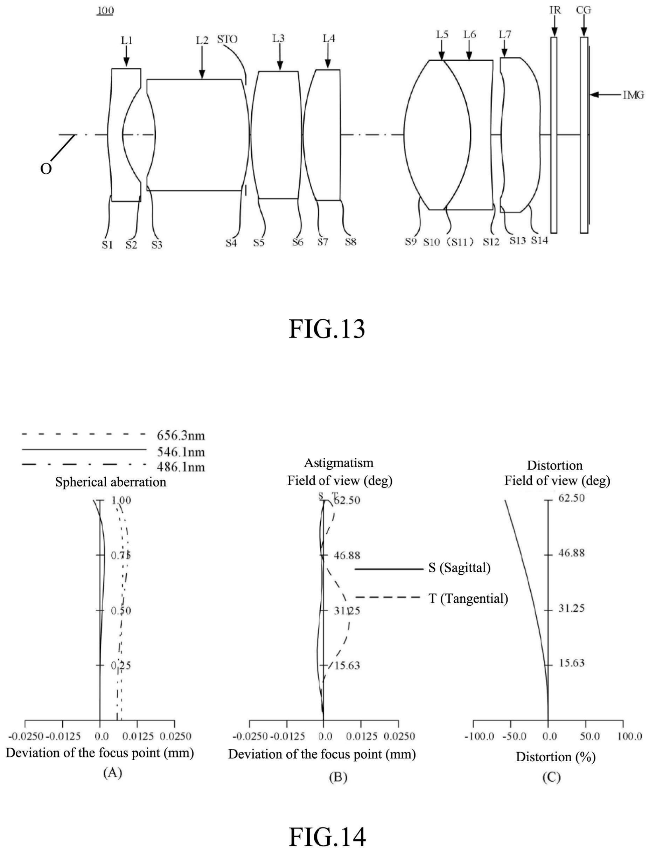

Referring to FIG. 13, an optical lens 100 sequentially includes a first lens L1, a second lens L2, an aperture STO, a third lens L3, a fourth lens L4, a fifth lens L5, a sixth lens L6, a seventh lens L7, a filter IR, and a protective glass CG along an optical axis O from an object side to an imaging side.
In the illustrated embodiment, the refractive power design of the first lens L1 to the seventh lens L7 is the same as that in the first embodiment.
In the surface shape design of the first lens L1 to the seventh lens L7, the surface shape design of the first lens L1 to the seventh lens L7 is the same as that in the first embodiment. Therefore, no further description is provided here.
FIG. 13 is a schematic structural diagram of the optical lens 100 of the seventh embodiment. The other parameters of the optical lens 100 are given in Table 13. The definitions of each parameter can be obtained from the description of the previous embodiment, which will not be repeated here.

Table 13

| Seventh embodiment | | | | | | | | |
|---|---|---|---|---|---|---|---|---|
| F=4.9514mm, FNO=1.600, FOV=125deg, TTL=32.000mm | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | asphere | 9.088 | 1.000 | glass | 1.85135 | 40.1 | -7.497 |
| 2 | | asphere | 3.560 | 2.167 | | | | |
| 3 | Second lens | sphere | -7.456 | 6.242 | glass | 1.87070 | 40.7 | -38.274 |
| 4 | | sphere | -13.348 | -0.241 | | | | |
| STO | Aperture | sphere | infinity | 0.341 | | | | |
| 5 | Third lens | sphere | 17.478 | 3.370 | glass | 1.61800 | 63.4 | 19.957 |
| 6 | | sphere | -38.817 | 0.100 | | | | |
| 7 | Fourth lens | sphere | 11.823 | 2.523 | glass | 1.59349 | 67.0 | 19.100 |
| 8 | | sphere | -253.338 | 4.205 | | | | |
| 9 | Fifth lens | sphere | 8.398 | 4.422 | glass | 1.61800 | 63.4 | 7.364 |

(continued)

| Seventh embodiment | | | | | | | | |
| --- | --- | --- | --- | --- | --- | --- | --- | --- |
| F=4.9514mm, FNO=1.600, FOV=125deg, TTL=32.000mm | | | | | | | | |
| Surface number | Surface name | Surface type | Y radius | Thickness | Material | Refractive index | Abbe number | Focal length |
| 11 | Sixth lens | sphere | -7.937 | 1.340 | glass | 2.00272 | 19.3 | -7.074 |
| 12 | | sphere | 72.350 | 0.682 | | | | |
| 13 | Seventh lens | asphere | 12.731 | 2.572 | glass | 1.80610 | 40.7 | 23.042 |
| 14 | | asphere | 36.819 | 0.728 | | | | |
| 15 | Filter | sphere | infinity | 0.400 | glass | 1.51680 | 64.2 | |
| 16 | | sphere | infinity | 1.550 | | | | |
| 17 | Protective glass | sphere | infinity | 0.500 | glass | 1.51680 | 64.2 | |
| 18 | | sphere | infinity | 0.100 | | | | |
| IMG | Image plane | sphere | infinity | | | | | |

In the seventh embodiment, Table 14 shows the higher-order term coefficients that can be used for each aspherical lens in the seventh embodiment, wherein, each aspherical surface shape can be defined by the formula given in the first embodiment.

Table 14

| Seventh embodiment | | | | |
| --- | --- | --- | --- | --- |
| Surface number | K | A4 | A6 | A8 | A10 |
| 1 | -3.70736E+00 | -4.75252E-03 | 2.91101E-04 | -1.17553E-05 | 5.18056E-07 |
| 2 | -8.86360E-02 | -8.27638E-03 | 4.16440E-04 | -3.45690E-05 | 6.76603E-09 |
| 13 | -6.27530E-02 | -1.50416E-03 | -7.95108E-05 | 1.06183E-05 | -1.64052E-06 |
| 14 | -7.22787E+00 | -1.88351E-03 | -7.34750E-05 | 8.37702E-06 | -8.21208E-07 |
| Surface number | A12 | A14 | A16 | A18 | A20 |
| 1 | -3.33018E-08 | 1.69421E-09 | -4.69022E-11 | 5.30116E-13 | 0.00000E+00 |
| 2 | 6.71348E-07 | -1.22950E-07 | 9.10251E-09 | -2.65650E-10 | 0.00000E+00 |
| 13 | 1.51291E-07 | -8.69097E-09 | 2.88499E-10 | -4.15758E-12 | 0.00000E+00 |
| 14 | 5.96547E-08 | -2.65500E-09 | 6.52445E-11 | -6.89860E-13 | 0.00000E+00 |

Referring to FIG. 14, it can be seen from (A) a spherical aberration diagram, (B) an astigmatism curve diagram, and (C) a distortion diagram in FIG. 14 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 14, (B) in Figure 14, and (C) in Figure 14, please refer to the contents described in (A) in Figure 2, (B) in Figure 2, and (C) in Figure 2 in the first embodiment and will not be described again here.

Referring to Table 15, Table 15 is a summary of the ratios of each relational expression in the first to seventh embodiments of the present disclosure.

Table 15

| Relational expression | First embodiment | Second embodiment | Third embodiment | Fourth embodiment | Fifth embodiment | Sixth embodiment | Seventh embodiment |
|---|---|---|---|---|---|---|---|
| FOV | 120 | 120 | 120 | 120 | 120 | 115 | 125 |
| TTL/F | 6.4494 | 6.3740 | 5.9380 | 5.7772 | 5.5783 | 6.2920 | 6.4628 |
| F/IMGH | 1.2690 | 1.2981 | 1.3366 | 1.3738 | 1.4227 | 1.2806 | 1.2280 |
| F*tan(FOV/2)/IMG | 2.1980 | 2.2484 | 2.3150 | 2.3794 | 2.4643 | 2.0102 | 2.3590 |
| ASAGS1/SAGS1 | 3.1494 | 3.5035 | 0.9612 | 3.8794 | 2.7361 | 3.3317 | 3.5972 |
| TTL/L1ST | 3.0901 | 3.0972 | 3.3528 | 3.5807 | 3.1936 | 3.9303 | 3.4902 |
| SAGS2/SAGS3 | -2.1204 | -2.2260 | -2.1408 | -2.0568 | -2.5025 | -1.6836 | -1.9704 |
| CT45/CT34 | 46.5060 | 47.1430 | 33.8480 | 20.2580 | 25.5540 | 38.3540 | 42.0520 |
| F34/F | 2.1364 | 2.0610 | 1.8528 | 1.7671 | 1.8618 | 1.9370 | 2.0579 |
| F7/F | 5.8770 | 6.0823 | 14.9519 | 4.1841 | 4.5425 | 4.5597 | 4.6536 |
| F/BFL | 1.6243 | 1.6616 | 1.7108 | 1.7584 | 1.8211 | 1.6392 | 1.5107 |
| (R1+R2)/(R1-R2) | 2.5833 | 2.7777 | 2.6920 | 2.7252 | 3.4840 | 2.3532 | 2.2878 |
| ET1/CT1 | 1.7400 | 1.7476 | 1.6573 | 1.6450 | 1.3390 | 1.7995 | 1.8205 |
| F1/CT1 | -8.3230 | -8.4750 | -7.1827 | -6.9706 | -7.7453 | -7.8100 | -7.4970 |
| CT2/F | 1.4658 | 1.4705 | 1.2017 | 1.0504 | 1.1701 | 1.0220 | 1.2606 |
| CTMAX/CTMIX | 7.5000 | 7.6967 | 6.2711 | 7.6763 | 6.3757 | 5.2772 | 6.2419 |
| TTL/CTMAX | 4.4000 | 4.3345 | 4.9412 | 5.2109 | 4.7674 | 6.1565 | 5.1266 |
| VD5-VD6 | 45.41 | 44.07 | 45.41 | 45.41 | 49.02 | 56.20 | 44.10 |
| R10/(N6-N5) | -27.8407 | -20.3991 | -23.1043 | -22.1982 | -26.2278 | -18.6814 | -20.6302 |
| F56/F | 6.1215 | 6.6348 | 4.5529 | 4.1841 | 4.5425 | 12.0537 | 8.3608 |
| F*R5/(N3-1) | 164.1354 | 215.0862 | 165.8263 | 166.3753 | 149.3049 | 166.707 | 140.0301 |
| FOV/FNO | 74.7664 | 74.9532 | 74.8130 | 75.0000 | 74.5805 | 71.4730 | 78.1250 |
| FOV*F/IMGH | 152.2827 | 155.7738 | 160.3869 | 164.8512 | 170.7292 | 147.2724 | 153.5032 |
| VD3>57.5 | 61.25 | 63.39 | 63.39 | 63.39 | 63.39 | 63.40 | 63.40 |
| FNO<1.7 | 1.605 | 1.601 | 1.604 | 1.6 | 1.609 | 1.609 | 1.6 |
| TTL/IMGH | 8.184 | 8.274 | 7.937 | 7.937 | 7.937 | 8.058 | 7.937 |

| Relational expression | First embodiment | Second embodiment | Third embodiment | Fourth embodiment | Fifth embodiment | Sixth embodiment | Seventh embodiment |
|---|---|---|---|---|---|---|---|
| SD7/SD6 | 1.042 | 1.033 | 1.025 | 1.026 | 1.010 | 1.144 | 1.024 |
| SD14/SD1 | 1.184 | 1.186 | 1.158 | 1.122 | 1.178 | 1.132 | 1.164 |
| SD1/IMGH | 2.024 | 2.024 | 2.024 | 2.029 | 2.024 | 2.024 | 2.024 |
| F1/F | -1.627 | -1.619 | -1.532 | -1.502 | -1.823 | -1.513 | -1.514 |
| F2/F | -7.627 | -7.388 | -7.719 | -7.816 | -6.797 | -7.039 | -7.730 |
| F3/F | 4.443 | 5.011 | 3.743 | 3.511 | 3.514 | 3.912 | 4.031 |
| F4/F | 3.891 | 3.356 | 3.427 | 3.243 | 3.663 | 3.456 | 3.857 |
| F5/F | 1.552 | 1.429 | 1.377 | 1.327 | 1.455 | 1.585 | 1.487 |
| F6/F | -1.658 | -1.471 | -1.645 | -1.612 | -1.771 | -1.448 | -1.429 |
| F2/CT2 | -5.203 | -5.024 | -6.423 | -7.442 | -5.809 | -6.888 | -6.132 |
| F3/CT3 | 9.700 | 11.672 | 8.564 | 7.928 | 8.749 | 4.166 | 5.923 |
| F4/CT4 | 7.932 | 6.740 | 4.326 | 2.925 | 4.621 | 6.646 | 7.570 |
| F5/CT5 | 1.799 | 1.698 | 1.780 | 1.682 | 1.999 | 1.875 | 1.665 |
| F6/CT6 | -8.319 | -5.361 | -8.585 | -11.163 | -9.650 | -4.843 | -5.278 |
| F7/CT7 | 9.113 | 10.041 | 26.976 | 7.859 | 7.814 | 8.702 | 8.961 |
| R1/R2 | 2.263 | 2.125 | 2.182 | 2.159 | 1.805 | 2.478 | 2.553 |
| R4/R3 | 1.879 | 1.862 | 1.757 | 1.689 | 1.810 | 1.734 | 1.790 |
| R6/R5 | -2.321 | -1.704 | -1.812 | -1.744 | -3.245 | -1.516 | -2.221 |
| \|R8/R7\| | 18.170 | 16.556 | 9.044 | 5.304 | 8.471 | 57.560 | 21.428 |
| R10/R9 | -1.055 | -0.889 | -0.826 | -0.781 | -1.041 | -1.074 | -0.945 |
| \|R12/R11\| | 7.667 | 66.456 | 11.039 | 7.622 | 27.700 | 8.561 | 9.116 |
| R14/R13 | 2.867 | 2.765 | 1.689 | 1.261 | 1.860 | 2.634 | 2.892 |

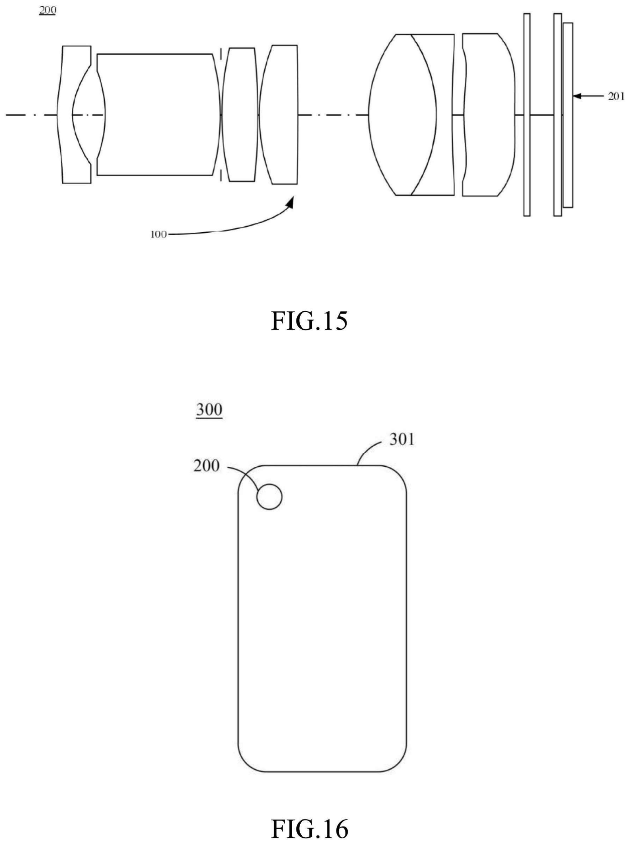

Referring to FIG. 15, the present disclosure also discloses an image module 200. The image module 200 includes an imaging sensor 201 and the optical lens 10 as described in any of the above embodiments. The imaging sensor 201 is arranged on the imaging side of the optical lens 10. A photosensitive surface of the imaging sensor 201 is located on the image plane IMG of the optical lens 10, and the light from the object passing through the lenses and transmitted to the photosensitive surface can be converted into an electrical signal of the image. The imaging sensor 201 may be a complementary metal oxide semiconductor (CMOS) or a charge-coupled device (CCD). The image module 200 may be an imaging module integrated in a terminal device 300 or an independent lens. It can be understood that the image module 200 with the above-mentioned optical lens 100 also has all the technical effects of the above-mentioned optical lens 100. That is, the image module 200 can have a larger field of view while can meet the design requirements of miniaturization of the optical lens 100. Since the above technical effects have been described in detail in the embodiments of the optical lens 100, they will not be repeated here.

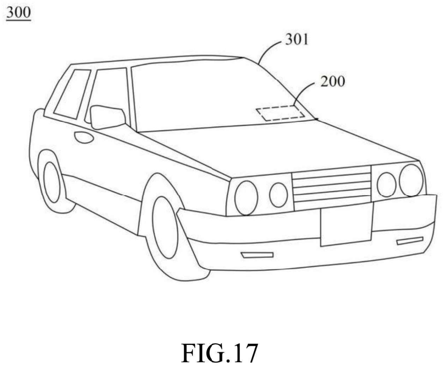

Referring to FIGS. 16 and 17, the present disclosure also discloses a terminal device 300. The terminal device 300 includes a housing 301 and the above-mentioned image module 200. The image module 200 is arranged in the housing 301. The terminal device 300 may be, but is not limited to, a mobile phone, a tablet, a laptop, a smart watch, a vehicle-mounted device, an unmanned aerial vehicle, or a monitor, etc. Referring to FIG. 16, the terminal device 300 is a mobile phone, and the image module 200 is arranged in the housing 301.

Referring to FIG. 17, the terminal device 300 may be a vehicle, in which case the housing 301 may be a vehicle body, and the image module 200 may be arranged on the vehicle body, for example, inside or outside the vehicle body.

It can be understood that the terminal device 300 with the above-mentioned image module 200 also has all the technical effects of the above-mentioned optical lens 100. That is, the terminal device 300 can have a larger field of view while can meet the design requirements of miniaturization of the optical lens 100. Since the above technical effects have been described in detail in the embodiments of the optical lens 100, they will not be repeated here.

The optical lens, image module and terminal device disclosed in the embodiments of the present invention have been introduced in detail above. Specific examples are used in this application to illustrate the principles and implementation methods of the present invention. The description of the above embodiments is only used to help understand the optical lens, image module and electronic device of the invention and its core idea; at the same time, for those of ordinary skill in the field, there will be changes in the specific implementation and application scope based on the ideas of the present invention. In summary, the content of this description should not be understood as a limitation of the present invention.

## Claims

1. An optical lens (100), from an object side to an imaging side along an optical axis (O), sequentially comprising:

   a first lens (L1) having negative refractive power, an object side surface (S1) of the first lens (L1) being convex near the optical axis (O), and an imaging side surface (S2) of the first lens (L1) being concave near the optical axis (O);
   a second lens (L2) having negative refractive power, an object side surface (S3) of the second lens (L2) being concave near the optical axis (O), and an imaging side surface (S4) of the second lens (L2) being convex near the optical axis (O);
   a third lens (L3) having positive refractive power, an object side surface (S5) and an imaging side surface (S6) of the third lens (L3) being both convex near the optical axis (O);
   a fourth lens (L4) having positive refractive power, an object side surface (S7) of the fourth lens (L4) being convex near the optical axis (O);
   a fifth lens (L5) having positive refractive power, an object side surface (S9) and an imaging side surface (S10) of the fifth lens (L5) being both convex near the optical axis (O);
   a sixth lens (L6) having negative refractive power, an object side surface (S11) of the sixth lens (L6) being concave near the optical axis (O);
   a seventh lens (L7) having positive refractive power, an object side surface (S13) of the seventh lens (L7) being convex near the optical axis (O), and an imaging side surface (S14) of the seventh lens (L7) being concave near the optical axis (O); and
   an image plane (IMG);
   the optical lens (100) satisfying following conditional expressions:

$$115 \text{deg} \leq FOV \leq 125 \text{deg, and } 5 < TTL/F < 7;$$

   wherein, FOV is the maximum field of view angle of the optical lens (100), TTL is a distance from an object side surface (S1) of the first lens (L1) to the image plane (IMG) of the optical lens (100) along the optical axis (O), and F is a focal length of the optical lens (100).

2. The optical lens (100) of claim 1, wherein the optical lens (100) further satisfies at least one of following conditional expressions:

$$1.2 < F/IMGH < 1.5,$$

$$2 < F*\tan(FOV/2)/IMGH < 2.5,$$

and

$$0.9 < ASAGS1/SAGS1 < 4,$$

wherein, IMGH is half of an image height corresponding to the maximum field of view angle of the optical lens (100), tan(FOV/2) is a tangent value of half of the maximum field of view angle of the optical lens (100), ASAGS1 is a sag of a paraxial radius of curvature of the object side surface (S1) of the first lens (L1), and SAGS1 is a distance along the optical axis (O) from the maximum effective semi-aperture of the object side surface (S1) of the first lens (L1) to an intersection point of the object side surface (S1) of the first lens (L1) and the optical axis (O).

3. The optical lens (100) of claim 1, wherein the optical lens (100) further satisfies at least one of following conditional expressions:

$$3 < TTL/L1ST < 4,$$

$$-3 < SAGS2/SAGS3 < -1.5,$$

and

$$CT45/CT34 > 20,$$

wherein, L1ST is a distance along the optical axis (O) from the object side surface (S1) of the first lens (L1) to the aperture of the optical lens (100), SAGS2 is a distance along the optical axis (O) from the maximum effective semi-aperture of the imaging side surface (S2) of the first lens (L1) to an intersection point of the imaging side surface (S2) of the first lens (L1) and the optical axis (O), SAGS3 is a distance along the optical axis (O) from the maximum effective semi-aperture of the object side surface (S3) of the second lens (L2) to an intersection point of the object side surface (S3) of the second lens (L2) and the optical axis (O), CT45 is a distance along the optical axis (O) from an imaging side surface (S8) of the fourth lens (L4) to the object side surface (S9) of the fifth lens (L5), and CT34 is a distance along the optical axis (O) from the imaging side surface (S6) of the third lens (L3) to the object side surface (S7) of the fourth lens (L4).

4. The optical lens (100) of claim 1, wherein the optical lens (100) further satisfies at least one of following conditional expressions:

$$1.5 < F34/F < 2.5,$$

$$F7/F > 4,$$

and

$$1.5 < F/BFL < 2,$$

wherein, F34 is a combined focal length of the third lens (L3) and the fourth lens (L4), F7 is a focal length of the seventh lens (L7), and BFL is a distance from the imaging side surface (S14) of the seventh lens (L7) to the image plane (IMG)

of the optical lens (100) along the optical axis (O).

5. The optical lens (100) of claim 1, wherein the optical lens (100) further satisfies at least one of following conditional expressions:

$$2<(R1+R2)/(R1-R2)<4,$$

$$1.3<ET1/CT1<1.9,$$

and

$$-10<F1/CT1<-5,$$

wherein, R1 is a radius of curvature of the object side surface (S1) of the first lens (L1) at the optical axis (O), R2 is a radius of curvature of the imaging side surface (S2) of the first lens (L1) at the optical axis (O), ET1 is a distance in a direction parallel to the optical axis (O) from the maximum effective semi-aperture of the object side surface (S1) of the first lens (L1) to the maximum effective semi-aperture on the imaging side surface (S2) of the first lens (L1), CT1 is a thickness of the first lens (L1) at the optical axis (O), and F1 is a focal length of the first lens (L1).

6. The optical lens (100) of claim 1, wherein the optical lens (100) further satisfies at least one of following conditional expressions:

$$1<CT2/F<1.5,$$

$$5<CTMAX/CTMIX<8,$$

and

$$4<TTL/CTMAX<7,$$

wherein, CT2 is a thickness of the second lens (L2) at the optical axis (O), CTMAX is the maximum thickness of a lens on the optical axis (O) among the first lens (L1) to the seventh lens (L7), and CTMIX is the minimum thickness of a lens on the optical axis (O) among the first lens (L1) to the seventh lens (L7).

7. The optical lens (100) of claim 1, wherein the optical lens (100) further satisfies at least one of following conditional expressions:

$$VD5-VD6>35,$$

$$-30mm<R10/(N6-N5)<-10mm,$$

and

$$4<F56/F<15,$$

wherein, VD5 is an Abbe number of the fifth lens (L5), VD6 is an Abbe number of the sixth lens (L6), R10 is the radius of curvature of the imaging side surface (S10) of the fifth lens (L5) at the optical axis (O), N6 is a refractive index of the sixth lens (L6), N5 is a refractive index of the fifth lens (L5), and F56 is a combined focal length of the fifth lens (L5) and the sixth lens (L6).

8. The optical lens (100) of claim 1, wherein the optical lens (100) further satisfies at least one of following conditional expressions:

$$F*R5/(N3-1)<295mm^2,$$

$$70deg<FOV/FNO<80deg,$$

and

$$140deg<FOV*F/IMGH<180deg,$$

wherein, R5 is the radius of curvature of the object side surface (S5) of the third lens (L3) at the optical axis (O), N3 is a refractive index of the third lens (L3), FNO is an aperture number of the optical lens (100), and IMGH is half of an image height corresponding to the maximum field of view angle of the optical lens (100).

9. The optical lens (100) of claim 1, wherein the optical lens (100) further satisfies at least one of following conditional expressions:

$$FNO<1.7,$$

and

$$7.5<TTL/IMGH<8.5,$$

wherein, FNO is an aperture number of the optical lens (100), and IMGH is half of an image height corresponding to the maximum field of view angle of the optical lens (100).

10. The optical lens (100) of claim 1, wherein the optical lens (100) further satisfies at least one of following conditional expressions:

$$-2<F1/F<-1,$$

$$-8<F2/F<-6.5,$$

$$3<F3/F<6,$$

$$3<F4/F<5,$$

$$1<F5/F<2,$$

and

$$-2<F6/F<-1,$$

wherein, F1 is a focal length of the first lens (L1), F2 is a focal length of the second lens (L2), F3 is a focal length of the third lens (L3), F4 is a focal length of the fourth lens (L4), F5 is a focal length of the fifth lens (L5), and F6 is a focal length of the sixth lens (L6).

11. The optical lens (100) of claim 1, wherein the optical lens (100) further satisfies at least one of following conditional expressions:

$$-8<F2/CT2<-4,$$

$$4<F3/CT3<12,$$

$$2<F4/CT4<10,$$

$$1.5<F5/CT5<2.5,$$

$$-12<F6/CT6<-4,$$

and

$$5<F7/CT7<30$$

wherein, F2 is a focal length of the second lens (L2), CT2 is a thickness of the second lens (L2) at the optical axis (O), F3 is a focal length of the third lens (L3), CT3 is a thickness of the third lens (L3) at the optical axis (O), F4 is a focal length of the fourth lens (L4), CT4 is a thickness of the fourth lens (L4) at the optical axis (O), F5 is a focal length of the fifth lens (L5), CT5 is a thickness of the fifth lens (L5) at the optical axis (O), F6 is a focal length of the sixth lens (L6), CT6 is a thickness of the sixth lens (L6) at the optical axis (O), F7 is a focal length of the seventh lens (L7), and CT7 is a thickness of the seventh lens (L7) at the optical axis (O).

12. The optical lens (100) of claim 1, wherein the optical lens (100) further satisfies at least one of following conditional expressions:

$$1<R1/R2<3,$$

$$1.5<R4/R3<2,$$

$$-4<R6/R5<-1,$$

$$|R8/R7|>5,$$

$$-0.5<R10/R9<-2,$$

$$|R12/R11|>5,$$

and

$$1<R14/R13<3,$$

wherein, R1 is a radius of curvature of the object side surface (S1) of the first lens (L1) at the optical axis (O), R2 is a radius of curvature of the imaging side surface (S2) of the first lens (L1) at the optical axis (O), R3 is a radius of curvature of the object side surface (S3) of the second lens (L2) at the optical axis (O), R4 is a radius of curvature of the imaging side surface (S4) of the second lens (L2) at the optical axis (O), R5 is a radius of curvature of the object side surface (S5) of the third lens (L3) at the optical axis (O), R6 is a radius of curvature of the imaging side surface (S6) of the third lens (L3) at the optical axis (O), R7 is a radius of curvature of the object side surface (S7) of the fourth lens (L4) at the optical axis (O), R8 is a radius of curvature of an imaging side surface (S8) of the fourth lens (L4) at the optical axis (O), R9 is a radius of curvature of the object side surface (S9) of the fifth lens (L5) at the optical axis (O), R10 is a radius of curvature of the imaging side surface (S10) of the fifth lens (L5) at the optical axis (O), R11 is a radius of curvature of the object side surface (S11) of the sixth lens (L6) at the optical axis (O), R12 is a radius of curvature of an imaging side surface (S12) of the sixth lens (L6) at the optical axis (O), R13 is a radius of curvature of the object side surface (S13) of the seventh lens (L7) at the optical axis (O), and R14 is a radius of curvature of the imaging side surface (S14) of the seventh lens (L7) at the optical axis (O).

13. The optical lens (100) of claim 1, wherein the optical lens (100) further satisfies at least one of following conditional expressions:

$$VD3 > 57.5,$$

$$SD7/SD6 > 1,$$

$$1.1 < SD14/SD1 < 1.2,$$

and

$$2 < SD1/IMGH < 2.1,$$

wherein, VD3 is an Abbe number of the third lens (L3), SD6 is the maximum effective semi-aperture of the imaging side surface (S6) of the third lens (L3), SD7 is the maximum effective semi-aperture of the object side surface (S7) of the fourth lens (L4), SD1 is the maximum effective semi-aperture of the object side surface (S1) of the first lens (L1), SD14 is the maximum effective semi-aperture of the imaging side surface (S13) of the seventh lens (L7), and IMGH is half of an image height corresponding to the maximum field of view angle of the optical lens (100).

14. An image module (200) comprising an imaging sensor (201) and the optical lens (100) of any one of claims 1 to 13, wherein the imaging sensor (201) is arranged on the imaging side of the optical lens (100).

15. A terminal device (300) comprising a housing (301) and the image module (200) of claim 14, wherein the image module (200) is arranged in the housing (301).

FIG.1

FIG.2

FIG.3

FIG.4

FIG.5

FIG.6

FIG.7

FIG.8

FIG.9

FIG.10

## FIG.11

## FIG.12

EP 4 679 157 A2

FIG.13

656.3nm
546.1nm
486.1nm

Spherical aberration

Astigmatism
Field of view (deg)

Distortion
Field of view (deg)

S (Sagittal)

T (Tangential)

Deviation of the focus point (mm)

(A)

Deviation of the focus point (mm)

(B)

Distortion (%)

(C)

FIG.14

FIG.15

FIG.16

FIG.17